(19)

Europäisches
Patentamt
European
Patent Office
Office européen
des brevets

(11)     **EP 3 282 803 A1**

(12)                    **EUROPEAN PATENT APPLICATION**
                        published in accordance with Art. 153(4) EPC

(43) Date of publication:
     **14.02.2018 Bulletin 2018/07**

(21) Application number: **16776905.8**

(22) Date of filing: **08.04.2016**

(51) Int Cl.:
     **H04W 74/08** (2009.01)      **H04W 72/04** (2009.01)

(86) International application number:
     **PCT/KR2016/003703**

(87) International publication number:
     **WO 2016/163802 (13.10.2016 Gazette 2016/41)**

(84) Designated Contracting States:
     **AL AT BE BG CH CY CZ DE DK EE ES FI FR GB
     GR HR HU IE IS IT LI LT LU LV MC MK MT NL NO
     PL PT RO RS SE SI SK SM TR**
     Designated Extension States:
     **BA ME**
     Designated Validation States:
     **MA MD**

(30) Priority:  **09.04.2015  US 201562144935 P**

(71) Applicant: **LG Electronics Inc.**
     **Yeongdeungpo-gu**
     **Seoul 07336 (KR)**

(72) Inventors:
     • **KIM, Seonwook**
       **Seoul 06772 (KR)**

     • **KIM, Kijun**
       **Seoul 06772 (KR)**
     • **AHN, Joonkui**
       **Seoul 06772 (KR)**
     • **SEO, Hanbyul**
       **Seoul 06772 (KR)**
     • **LEE, Seungmin**
       **Seoul 06772 (KR)**
     • **PARK, Hanjun**
       **Seoul 06772 (KR)**

(74) Representative: **Cabinet Plasseraud**
     **66, rue de la Chaussée d'Antin**
     **75440 Paris Cedex 09 (FR)**

(54)     **METHOD FOR PERFORMING CCA IN WIRELESS ACCESS SYSTEM SUPPORTING
         UNLICENSED BAND, AND APPARATUS FOR SUPPORTING SAME**

(57)     The present invention relates to a wireless access system supporting an unlicensed band, and to a method for performing a clear channel assessment (CCA) or a LBT, and an apparatus for supporting the same. As one embodiment of the present invention, the method by which a terminal performs a CCA in the wireless access system supporting an unlicensed band comprises the steps of: receiving resource allocation information indicating a resource region allocated in the unlicensed band; performing the CCA only for the resource region; and transmitting uplink data through the resource region when the resource region is in an idle state.

FIG. 17

EP 3 282 803 A1

**Description**

TECHNICAL FIELD

The present invention relates to a wireless access system supporting an unlicensed band, and more particularly, to a method of performing a CCA (clear channel assessment) and an apparatus supporting the same.

BACKGROUND ART

Wireless access systems have been widely deployed to provide various types of communication services such as voice or data. In general, a wireless access system is a multiple access system that supports communication of multiple users by sharing available system resources (a bandwidth, transmission power, etc.) among them. For example, multiple access systems include a Code Division Multiple Access (CDMA) system, a Frequency Division Multiple Access (FDMA) system, a Time Division Multiple Access (TDMA) system, an Orthogonal Frequency Division Multiple Access (OFDMA) system, and a Single Carrier Frequency Division Multiple Access (SC-FDMA) system.

DISCLOSURE OF THE INVENTION

TECHNICAL TASKS

An object of the present invention is to provide a method of efficiently transmitting and receiving data in a wireless access system supporting an unlicensed band.
Another object of the present invention is to provide a method of efficiently performing a CCA or a LBT in a wireless access system supporting an unlicensed band.
Another object of the present invention is to provide a method of transmitting an uplink data when a CCA is performed on a resource region allocated to a terminal only.
The other object of the present invention is to provide a device supporting the methods.
It will be appreciated by persons skilled in the art that the objects that could be achieved with the present disclosure are not limited to what has been particularly described hereinabove and the above and other objects that the present disclosure could achieve will be more clearly understood from the following detailed description.

TECHNICAL SOLUTION

The present invention relates to a wireless access system supporting an unlicensed band, and more particularly, to a method of performing a CCA or a LBT and an apparatus supporting the same.
To achieve these and other advantages and in accordance with the purpose of the present invention, as embodied and broadly described, according to one embodiment, a method of performing a CCA (clear channel assessment), which is performed by a user equipment in a wireless access system supporting an unlicensed band, includes the steps of receiving resource allocation information indicating a resource region allocated to the unlicensed band, performing the CCA on the resource region only, and if the resource region is in an idle state, transmitting uplink data through the resource region.
To further achieve these and other advantages and in accordance with the purpose of the present invention, according to a different embodiment, a user equipment performing a CCA (clear channel assessment) in a wireless access system supporting an unlicensed band includes a receiver, a transmitter, and a processor configured to support performance of the CCA in a manner of being functionally connected with the receiver and the transmitter, the processor configured to control the receiver to receive resource allocation information indicating a resource region allocated to the unlicensed band, the processor configured to perform the CCA on the resource region only, the processor, if the resource region is in an idle state, configured to control the transmitter to transmit uplink data through the resource region.
In this case, the resource region can be allocated in a resource block unit and the CCA can be performed in the resource block unit. In this case, if the number of resource blocks (N') included in the resource region is different from the number of resource blocks (N1), which are determined as idle according to a result of the CCA, the uplink data can be transmitted by fixing a transport block size determined by the number of resource blocks (N') and performing rate matching or puncturing according to the number of resource blocks (N1).
Or, the resource region can be allocated in a resource block unit and the CCA can be performed on a subchannel including the resource region. In this case, if the number of resource blocks (N') included in the resource region is different from the number of resource blocks (N2), which are determined as idle according to a result of the CCA, the uplink data can be transmitted by fixing a transport block size determined by the number of resource blocks (N') and performing rate matching or puncturing according to the number of resource blocks (N2).

If the resource region is allocated by a frequency hopping scheme or is allocated to contiguous subframes, the CCA can be performed on all subchannels to which the resource region belongs thereto.

It is to be understood that both the foregoing general description and the following detailed description of the present disclosure are exemplary and explanatory and are intended to provide further explanation of the disclosure as claimed.

ADVANTAGEOUS EFFECTS

As is apparent from the above description, the embodiments of the present disclosure have the following effects.

First of all, it is able to efficiently transmit and receive data in a wireless access system supporting an unlicensed band.

Secondly, it is able to efficiently perform a CCA or a LBT in a wireless access system supporting an unlicensed band. In particular, although a region not allocated to the terminal is busy, it may be able to transmit and receive data when a resource region allocated to a terminal is in an idle state by performing a CCA in a unit of the resource region allocated to the terminal or a unit of a subchannel including the resource region.

Thirdly, although a size of a resource region allocated to a terminal is different from a size of a resource region in an idle state, it may be able to transmit an uplink data according to embodiments of the present invention.

It will be apparent to those skilled in the art that various modifications and variations can be made in the present disclosure without departing from the technical features or scope of the disclosures. Thus, it is intended that the present disclosure covers the modifications and variations of this disclosure provided they come within the scope of the appended claims and their equivalents.

DESCRIPTION OF DRAWINGS

The accompanying drawings, which are included to provide a further understanding of the disclosure, illustrate embodiments of the disclosure and together with the description serve to explain the principle of the disclosure. In the drawings:

FIG. 1 is a view illustrating physical channels and a signal transmission method using the physical channels;
FIG. 2 is a view illustrating exemplary radio frame structures;
FIG. 3 is a view illustrating an exemplary resource grid for the duration of a downlink slot;
FIG. 4 is a view illustrating an exemplary structure of an uplink subframe;
FIG. 5 is a view illustrating an exemplary structure of a downlink subframe;
FIG. 6 is a view illustrating an example of Component Carriers (CCs) and Carrier Aggregation (CA) in a Long Term Evolution-Advanced (LTE-A) system;
FIG. 7 is a view illustrating a subframe structure based on cross-carrier scheduling in the LTE-A system;
FIG. 8 is a view illustrating an exemplary serving cell configuration based on cross-carrier scheduling;
FIG. 9 is a conceptual view of a Coordinated Multi-Point (CoMP) system operating in a CA environment;
FIG. 10 is a view illustrating an exemplary subframe to which UE-specific Reference Signals (UE-RSs) are allocated, which may be used in embodiments of the present disclosure;
FIG. 11 is a view illustrating exemplary multiplexing of legacy Physical Downlink Control Channel (PDCCH), Physical Downlink Shared Channel (PDSCH), and Evolved-PDCCH (E-PDCCH) in an LTE/LTE-A system;
FIG. 12 is a view illustrating an exemplary CA environment supported in an LTE-Unlicensed (LTE-U) system;
FIG. 13 is a view illustrating an exemplary Frame Based Equipment (FBE) operation as one of Listen-Before-Talk (LBT) operations;
FIG. 14 is a block diagram illustrating the FBE operation;
FIG. 15 is a view illustrating an exemplary Load Based Equipment (LBE) operation as one of the LBT operations;
FIG. 16 is one of diagrams for explaining a method of performing a CCA;
FIG. 17 is a diagram for explaining a method of performing a CCA in an allocated band only among unlicensed bands;
FIG. 18 is a diagram for explaining methods for a UE to which a partial RB is allocated only among a plurality of RBs constructing a bandwidth to perform a CCA operation;
FIG. 19 is a diagram for explaining methods of performing a CCA operation on a subchannel in which an RB allocated to a UE is included only when a bandwidth includes a plurality of subchannels;
FIG. 20 is a different diagram for explaining methods for a UE to which a partial RB is allocated only among a plurality of RBs constructing a bandwidth to perform a CCA operation;
FIG. 21 is a diagram for explaining an apparatus capable of implementing the methods mentioned earlier in FIGS. 1 to 20.

BEST MODE

MODE FOR INVENTION

Embodiments of the present invention described in the following relate to a wireless access system supporting an unlicensed band. The embodiments of the present invention relate to a method of performing a CCA and an apparatus supporting the same.

The embodiments of the present disclosure described below are combinations of elements and features of the present disclosure in specific forms. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions or elements of any one embodiment may be included in another embodiment and may be replaced with corresponding constructions or features of another embodiment.

In the description of the attached drawings, a detailed description of known procedures or steps of the present disclosure will be avoided lest it should obscure the subject matter of the present disclosure. In addition, procedures or steps that could be understood to those skilled in the art will not be described either.

Throughout the specification, when a certain portion "includes" or "comprises" a certain component, this indicates that other components are not excluded and may be further included unless otherwise noted. The terms "unit", "-or/er" and "module" described in the specification indicate a unit for processing at least one function or operation, which may be implemented by hardware, software or a combination thereof. In addition, the terms "a or an", "one", "the" etc. may include a singular representation and a plural representation in the context of the present disclosure (more particularly, in the context of the following claims) unless indicated otherwise in the specification or unless context clearly indicates otherwise.

In the embodiments of the present disclosure, a description is mainly made of a data transmission and reception relationship between a Base Station (BS) and a User Equipment (UE). A BS refers to a terminal node of a network, which directly communicates with a UE. A specific operation described as being performed by the BS may be performed by an upper node of the BS.

Namely, it is apparent that, in a network comprised of a plurality of network nodes including a BS, various operations performed for communication with a UE may be performed by the BS, or network nodes other than the BS. The term 'BS' may be replaced with a fixed station, a Node B, an evolved Node B (eNode B or eNB), an Advanced Base Station (ABS), an access point, etc.

In the embodiments of the present disclosure, the term terminal may be replaced with a UE, a Mobile Station (MS), a Subscriber Station (SS), a Mobile Subscriber Station (MSS), a mobile terminal, an Advanced Mobile Station (AMS), etc.

A transmission end is a fixed and/or mobile node that provides a data service or a voice service and a reception end is a fixed and/or mobile node that receives a data service or a voice service. Therefore, a UE may serve as a transmission end and a BS may serve as a reception end, on an UpLink (UL). Likewise, the UE may serve as a reception end and the BS may serve as a transmission end, on a DownLink (DL).

The embodiments of the present disclosure may be supported by standard specifications disclosed for at least one of wireless access systems including an Institute of Electrical and Electronics Engineers (IEEE) 802.xx system, a 3rd Generation Partnership Project (3GPP) system, a 3GPP Long Term Evolution (LTE) system, and a 3GPP2 system. In particular, the embodiments of the present disclosure may be supported by the standard specifications, 3GPP TS 36.211, 3GPP TS 36.212, 3GPP TS 36.213, 3GPP TS 36.321 and 3GPP TS 36.331. That is, the steps or parts, which are not described to clearly reveal the technical idea of the present disclosure, in the embodiments of the present disclosure may be explained by the above standard specifications. All terms used in the embodiments of the present disclosure may be explained by the standard specifications.

Reference will now be made in detail to the embodiments of the present disclosure with reference to the accompanying drawings. The detailed description, which will be given below with reference to the accompanying drawings, is intended to explain exemplary embodiments of the present disclosure, rather than to show the only embodiments that can be implemented according to the disclosure.

The following detailed description includes specific terms in order to provide a thorough understanding of the present disclosure. However, it will be apparent to those skilled in the art that the specific terms may be replaced with other terms without departing the technical spirit and scope of the present disclosure.

For example, the term, TxOP may be used interchangeably with transmission period or Reserved Resource Period (RRP) in the same sense. Further, a Listen-Before-Talk (LBT) procedure may be performed for the same purpose as a carrier sensing procedure for determining whether a channel state is idle or busy.

Hereinafter, 3GPP LTE/LTE-A systems are explained, which are examples of wireless access systems.

4

The embodiments of the present disclosure can be applied to various wireless access systems such as Code Division Multiple Access (CDMA), Frequency Division Multiple Access (FDMA), Time Division Multiple Access (TDMA), Orthogonal Frequency Division Multiple Access (OFDMA), Single Carrier Frequency Division Multiple Access (SC-FDMA), etc.

CDMA may be implemented as a radio technology such as Universal Terrestrial Radio Access (UTRA) or CDMA2000. TDMA may be implemented as a radio technology such as Global System for Mobile communications (GSM)/General packet Radio Service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, Evolved UTRA (E-UTRA), etc.

UTRA is a part of Universal Mobile Telecommunications System (UMTS). 3GPP LTE is a part of Evolved UMTS (E-UMTS) using E-UTRA, adopting OFDMA for DL and SC-FDMA for UL. LTE-Advanced (LTE-A) is an evolution of 3GPP LTE. While the embodiments of the present disclosure are described in the context of a 3GPP LTE/LTE-A system in order to clarify the technical features of the present disclosure, the present disclosure is also applicable to an IEEE 802.16e/m system, etc.

## 1. 3GPP LTE/LTE-A System

In a wireless access system, a UE receives information from an eNB on a DL and transmits information to the eNB on a UL. The information transmitted and received between the UE and the eNB includes general data information and various types of control information. There are many physical channels according to the types/usages of information transmitted and received between the eNB and the UE.

### 1.1 System Overview

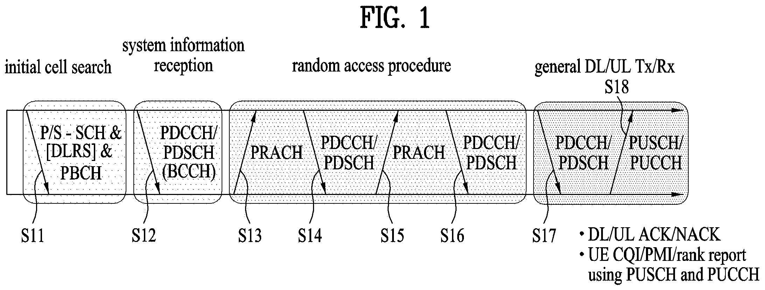

FIG. 1 illustrates physical channels and a general signal transmission method using the physical channels, which may be used in embodiments of the present disclosure.

When a UE is powered on or enters a new cell, the UE performs initial cell search (S11). The initial cell search involves acquisition of synchronization to an eNB. Specifically, the UE synchronizes its timing to the eNB and acquires information such as a cell Identifier (ID) by receiving a Primary Synchronization Channel (P-SCH) and a Secondary Synchronization Channel (S-SCH) from the eNB.

Then the UE may acquire information broadcast in the cell by receiving a Physical Broadcast Channel (PBCH) from the eNB.

During the initial cell search, the UE may monitor a DL channel state by receiving a Downlink Reference Signal (DL RS).

After the initial cell search, the UE may acquire more detailed system information by receiving a Physical Downlink Control Channel (PDCCH) and receiving a Physical Downlink Shared Channel (PDSCH) based on information of the PDCCH (S12).

To complete connection to the eNB, the UE may perform a random access procedure with the eNB (S13 to S16). In the random access procedure, the UE may transmit a preamble on a Physical Random Access Channel (PRACH) (S13) and may receive a PDCCH and a PDSCH associated with the PDCCH (S14). In the case of contention-based random access, the UE may additionally perform a contention resolution procedure including transmission of an additional PRACH (S15) and reception of a PDCCH signal and a PDSCH signal corresponding to the PDCCH signal (S16).

After the above procedure, the UE may receive a PDCCH and/or a PDSCH from the eNB (S17) and transmit a Physical Uplink Shared Channel (PUSCH) and/or a Physical Uplink Control Channel (PUCCH) to the eNB (S18), in a general UL/DL signal transmission procedure.

Control information that the UE transmits to the eNB is generically called Uplink Control Information (UCI). The UCI includes a Hybrid Automatic Repeat and reQuest Acknowledgement/Negative Acknowledgement (HARQ-ACK/NACK), a Scheduling Request (SR), a Channel Quality Indicator (CQI), a Precoding Matrix Index (PMI), a Rank Indicator (RI), etc.

In the LTE system, UCI is generally transmitted on a PUCCH periodically. However, if control information and traffic data should be transmitted simultaneously, the control information and traffic data may be transmitted on a PUSCH. In addition, the UCI may be transmitted aperiodically on the PUSCH, upon receipt of a request/command from a network.

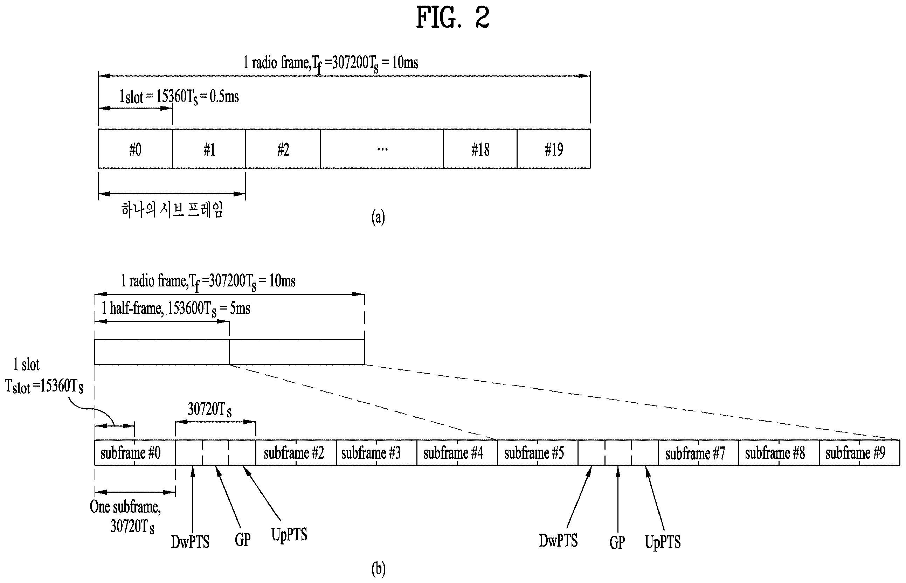

FIG. 2 illustrates exemplary radio frame structures used in embodiments of the present disclosure.

FIG. 2(a) illustrates frame structure type 1. Frame structure type 1 is applicable to both a full Frequency Division Duplex (FDD) system and a half FDD system.

One radio frame is 10ms ($T_f=307200 \cdot T_s$) long, including equal-sized 20 slots indexed from 0 to 19. Each slot is 0.5ms ($T_{slot}=15360 \cdot T_s$) long. One subframe includes two successive slots. An ith subframe includes 2ith and (2i+1)th slots. That is, a radio frame includes 10 subframes. A time required for transmitting one subframe is defined as a Transmission Time Interval (TTI). Ts is a sampling time given as Ts=1/(15kHzx2048)=3.2552x10-8 (about 33ns). One slot includes a plurality of Orthogonal Frequency Division Multiplexing (OFDM) symbols or SC-FDMA symbols in the time domain by a plurality of Resource Blocks (RBs) in the frequency domain.

A slot includes a plurality of OFDM symbols in the time domain. Since OFDMA is adopted for DL in the 3GPP LTE system, one OFDM symbol represents one symbol period. An OFDM symbol may be called an SC-FDMA symbol or symbol period. An RB is a resource allocation unit including a plurality of contiguous subcarriers in one slot.

In a full FDD system, each of 10 subframes may be used simultaneously for DL transmission and UL transmission during a 10-ms duration. The DL transmission and the UL transmission are distinguished by frequency. On the other hand, a UE cannot perform transmission and reception simultaneously in a half FDD system.

The above radio frame structure is purely exemplary. Thus, the number of subframes in a radio frame, the number of slots in a subframe, and the number of OFDM symbols in a slot may be changed.

FIG. 2(b) illustrates frame structure type 2. Frame structure type 2 is applied to a Time Division Duplex (TDD) system. One radio frame is 10ms (Tf=307200·Ts) long, including two half-frames each having a length of 5ms (=153600·Ts) long. Each half-frame includes five subframes each being 1ms (=30720·Ts) long. An ith subframe includes 2ith and (2i+1)th slots each having a length of 0.5ms (Tslot=15360·Ts). Ts is a sampling time given as Ts=1/(15kHzx2048)=3.2552x10-8 (about 33ns).

A type-2 frame includes a special subframe having three fields, Downlink Pilot Time Slot (DwPTS), Guard Period (GP), and Uplink Pilot Time Slot (UpPTS). The DwPTS is used for initial cell search, synchronization, or channel estimation at a UE, and the UpPTS is used for channel estimation and UL transmission synchronization with a UE at an eNB. The GP is used to cancel UL interference between a UL and a DL, caused by the multi-path delay of a DL signal.

[Table 1] below lists special subframe configurations (DwPTS/GP/UpPTS lengths).

[Table 1]

| Special subframe configuration | Normal cyclic prefix in downlink | | | Extended cyclic prefix in downlink | | |
|---|---|---|---|---|---|---|
| | DwPTS | UpPTS | | DwPTS | UpPTS | |
| | | Normal cyclic prefix in uplink | Extended cyclic prefix in uplink | | Normal cyclic prefix in uplink | Extended cyclic prefix in uplink |
| 0 | $6592 \cdot T_s$ | $2192 \cdot T_s$ | $2560 \cdot T_s$ | $7680 \cdot T_s$ | $2192 \cdot T_s$ | $2560 \cdot T_s$ |
| 1 | $19760 \cdot T_s$ | | | $20480 \cdot T_s$ | | |
| 2 | $21952 \cdot T_s$ | | | $23040 \cdot T_s$ | | |
| 3 | $24144 \cdot T_s$ | | | $25600 \cdot T_s$ | | |
| 4 | $26336 \cdot T_s$ | | | $7680 \cdot T_s$ | $4384 \cdot T_s$ | $5120 \cdot T_s$ |
| 5 | $6592 \cdot T_s$ | $4394 \cdot T_s$ | $5120 \cdot T_s$ | $20480 \cdot T_s$ | | |
| 6 | $19760 \cdot T_s$ | | | $23040 \cdot T_s$ | | |
| 7 | $21952 \cdot T_s$ | | | - | | |
| 8 | $24144 \cdot T_s$ | | | - | - | - |

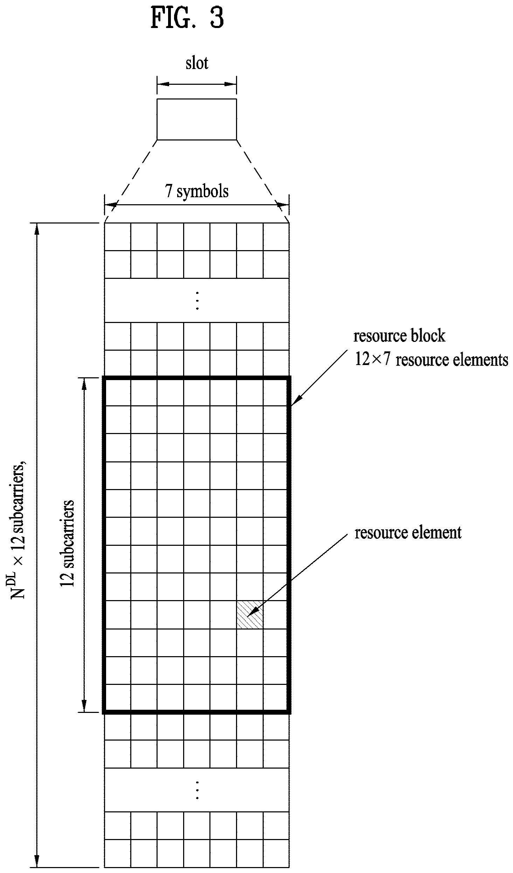

FIG. 3 illustrates an exemplary structure of a DL resource grid for the duration of one DL slot, which may be used in embodiments of the present disclosure.

Referring to FIG. 3, a DL slot includes a plurality of OFDM symbols in the time domain. One DL slot includes 7 OFDM symbols in the time domain and an RB includes 12 subcarriers in the frequency domain, to which the present disclosure is not limited.

Each element of the resource grid is referred to as a Resource Element (RE). An RB includes 12x7 REs. The number of RBs in a DL slot, NDL depends on a DL transmission bandwidth. A UL slot may have the same structure as a DL slot.

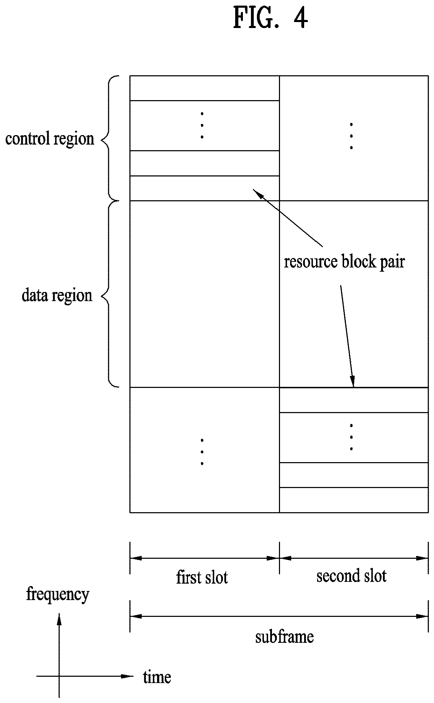

FIG. 4 illustrates a structure of a UL subframe which may be used in embodiments of the present disclosure.

Referring to FIG. 4, a UL subframe may be divided into a control region and a data region in the frequency domain. A PUCCH carrying UCI is allocated to the control region and a PUSCH carrying user data is allocated to the data region. To maintain a single carrier property, a UE does not transmit a PUCCH and a PUSCH simultaneously. A pair of RBs in a subframe are allocated to a PUCCH for a UE. The RBs of the RB pair occupy different subcarriers in two slots. Thus it is said that the RB pair frequency-hops over a slot boundary.

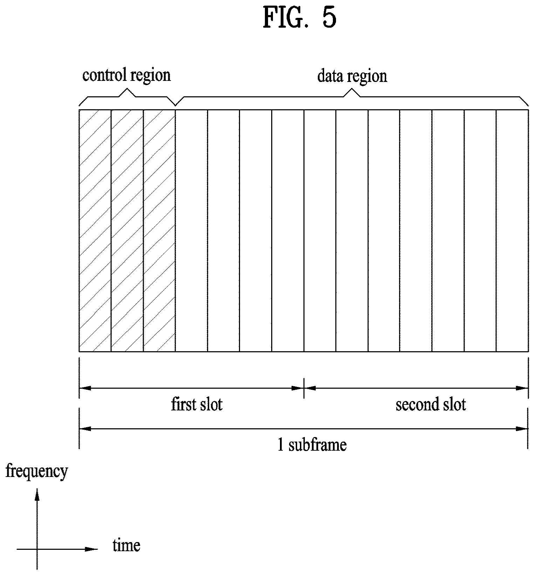

FIG. 5 illustrates a structure of a DL subframe that may be used in embodiments of the present disclosure.

Referring to FIG. 5, up to three OFDM symbols of a DL subframe, starting from OFDM symbol 0 are used as a control region to which control channels are allocated and the other OFDM symbols of the DL subframe are used as a data region to which a PDSCH is allocated. DL control channels defined for the 3GPP LTE system include a Physical Control Format Indicator Channel (PCFICH), a PDCCH, and a Physical Hybrid ARQ Indicator Channel (PHICH).

The PCFICH is transmitted in the first OFDM symbol of a subframe, carrying information about the number of OFDM symbols used for transmission of control channels (i.e. the size of the control region) in the subframe. The PHICH is a response channel to a UL transmission, delivering an HARQ ACK/NACK signal. Control information carried on the PDCCH is called Downlink Control Information (DCI). The DCI transports UL resource assignment information, DL resource assignment information, or UL Transmission (Tx) power control commands for a UE group.

## 1.2 Physical Downlink Control Channel (PDCCH)

### 1.2.1 PDCCH Overview

The PDCCH may deliver information about resource allocation and a transport format for a Downlink Shared Channel (DL-SCH) (i.e. a DL grant), information about resource allocation and a transport format for an Uplink Shared Channel (UL-SCH) (i.e. a UL grant), paging information of a Paging Channel (PCH), system information on the DL-SCH, information about resource allocation for a higher-layer control message such as a random access response transmitted on the PDSCH, a set of Tx power control commands for individual UEs of a UE group, Voice Over Internet Protocol (VoIP) activation indication information, etc.

A plurality of PDCCHs may be transmitted in the control region. A UE may monitor a plurality of PDCCHs. A PDCCH is transmitted in an aggregate of one or more consecutive Control Channel Elements (CCEs). A PDCCH made up of one or more consecutive CCEs may be transmitted in the control region after subblock interleaving. A CCE is a logical allocation unit used to provide a PDCCH at a code rate based on the state of a radio channel. A CCE includes a plurality of RE Groups (REGs). The format of a PDCCH and the number of available bits for the PDCCH are determined according to the relationship between the number of CCEs and a code rate provided by the CCEs.

### 1.2.2 PDCCH Structure

A plurality of PDCCHs for a plurality of UEs may be multiplexed and transmitted in the control region. A PDCCH is made up of an aggregate of one or more consecutive CCEs. A CCE is a unit of 9 REGs each REG including 4 REs. Four Quadrature Phase Shift Keying (QPSK) symbols are mapped to each REG. REs occupied by RSs are excluded from REGs. That is, the total number of REGs in an OFDM symbol may be changed depending on the presence or absence of a cell-specific RS. The concept of an REG to which four REs are mapped is also applicable to other DL control channels (e.g. the PCFICH or the PHICH). Let the number of REGs that are not allocated to the PCFICH or the PHICH be denoted by NREG. Then the number of CCEs available to the system is NCCE ($=\lfloor N_{REG}/9 \rfloor$) and the CCEs are indexed from 0 to NCCE-1.

To simplify the decoding process of a UE, a PDCCH format including n CCEs may start with a CCE having an index equal to a multiple of n. That is, given CCE i, the PDCCH format may start with a CCE satisfying $i \bmod n = 0$.

The eNB may configure a PDCCH with 1, 2, 4, or 8 CCEs. {1, 2, 4, 8} are called CCE aggregation levels. The number of CCEs used for transmission of a PDCCH is determined according to a channel state by the eNB. For example, one CCE is sufficient for a PDCCH directed to a UE in a good DL channel state (a UE near to the eNB). On the other hand, 8 CCEs may be required for a PDCCH directed to a UE in a poor DL channel state (a UE at a cell edge) in order to ensure sufficient robustness.

[Table 2] below illustrates PDCCH formats. 4 PDCCH formats are supported according to CCE aggregation levels as illustrated in [Table 2].

[Table 2]

| PDCCH format | Number of CCE (n) | Number of REG | Number of PDCCH bits |
|---|---|---|---|
| 0 | 1 | 9 | 72 |
| 1 | 2 | 18 | 144 |
| 2 | 4 | 36 | 288 |
| 3 | 8 | 72 | 576 |

A different CCE aggregation level is allocated to each UE because the format or Modulation and Coding Scheme (MCS) level of control information delivered in a PDCCH for the UE is different. An MCS level defines a code rate used for data coding and a modulation order. An adaptive MCS level is used for link adaptation. In general, three or four MCS levels may be considered for control channels carrying control information.

Regarding the formats of control information, control information transmitted on a PDCCH is called DCI. The configuration of information in PDCCH payload may be changed depending on the DCI format. The PDCCH payload is information bits. [Table 3] lists DCI according to DCI formats.

[Table 3]

| DCI Format | Description |
|---|---|
| For mat 0 | Resource grants for PUSCH transmissions (uplink) |
| For mat 1 | Resource assignments for single codeword PDSCH transmission (transmission modes 1, 2 and 7) |
| For mat 1A | Compact signaling of resource assignments for single codeword PDSCH (all modes) |
| For mat 1B | Compact resource assignments for PDSCH using rank-1 closed loop precoding (mode 6) |
| For mat 1C | Very compact resource assignments for PDSCH (e.g., paging/broadcast system information) |
| For mat 1D | Compact resource assignments for PDSCH using multi-user MIMO(mode 5) |
| For mat 2 | Resource assignments for PDSCH for closed loop MIMO operation (mode 4) |
| For mat 2A | resource assignments for PDSCH for open loop MIMO operation (mode 3) |
| For mat 3/3A | Power control commands for PUCCH and PUSCH with 2-bit/1-bit power adjustment |
| For mat 4 | Scheduling of PUSCH in one UL cell with multi-antenna port transmission mode |

Referring to [Table 3], the DCI formats include Format 0 for PUSCH scheduling, Format 1 for single-codeword PDSCH scheduling, Format 1A for compact single-codeword PDSCH scheduling, Format 1C for very compact DL-SCH scheduling, Format 2 for PDSCH scheduling in a closed-loop spatial multiplexing mode, Format 2A for PDSCH scheduling in an open-loop spatial multiplexing mode, and Format 3/3A for transmission of Transmission Power Control (TPC) commands for uplink channels. DCI Format 1A is available for PDSCH scheduling irrespective of the transmission mode of a UE.

The length of PDCCH payload may vary with DCI formats. In addition, the type and length of PDCCH payload may be changed depending on compact or non-compact scheduling or the transmission mode of a UE.

The transmission mode of a UE may be configured for DL data reception on a PDSCH at the UE. For example, DL data carried on a PDSCH includes scheduled data, a paging message, a random access response, broadcast information on a BCCH, etc. for a UE. The DL data of the PDSCH is related to a DCI format signaled through a PDCCH. The transmission mode may be configured semi-statically for the UE by higher-layer signaling (e.g. Radio Resource Control (RRC) signaling). The transmission mode may be classified as single antenna transmission or multi-antenna transmission.

A transmission mode is configured for a UE semi-statically by higher-layer signaling. For example, multi-antenna transmission scheme may include transmit diversity, open-loop or closed-loop spatial multiplexing, Multi-User Multiple Input Multiple Output (MU-MIMO), or beamforming. Transmit diversity increases transmission reliability by transmitting the same data through multiple Tx antennas. Spatial multiplexing enables high-speed data transmission without increasing a system bandwidth by simultaneously transmitting different data through multiple Tx antennas. Beamforming is a technique of increasing the Signal to Interference plus Noise Ratio (SINR) of a signal by weighting multiple antennas according to channel states.

A DCI format for a UE depends on the transmission mode of the UE. The UE has a reference DCI format monitored according to the transmission mode configure for the UE. The following 10 transmission modes are available to UEs:

(1) Transmission mode 1: Single antenna port (port 0);
(2) Transmission mode 2: Transmit diversity;
(3) Transmission mode 3: Open-loop spatial multiplexing when the number of layer is larger than 1 or Transmit diversity when the rank is 1;
(4) Transmission mode 4: Closed-loop spatial multiplexing;
(5) Transmission mode 5: MU-MIMO;

(6) Transmission mode 6: Closed-loop rank-1 precoding;

(7) Transmission mode 7: Precoding supporting a single layer transmission, which is not based on a codebook (Rel-8);

(8) Transmission mode 8: Precoding supporting up to two layers, which are not based on a codebook (Rel-9);

(9) Transmission mode 9: Precoding supporting up to eight layers, which are not based on a codebook (Rel-10); and

(10) Transmission mode 10: Precoding supporting up to eight layers, which are not based on a codebook, used for CoMP (Rel-11).

### 1.2.3 PDCCH Transmission

The eNB determines a PDCCH format according to DCI that will be transmitted to the UE and adds a Cyclic Redundancy Check (CRC) to the control information. The CRC is masked by a unique Identifier (ID) (e.g. a Radio Network Temporary Identifier (RNTI)) according to the owner or usage of the PDCCH. If the PDCCH is destined for a specific UE, the CRC may be masked by a unique ID (e.g. a cell-RNTI (C-RNTI)) of the UE. If the PDCCH carries a paging message, the CRC of the PDCCH may be masked by a paging indicator ID (e.g. a Paging-RNTI (P-RNTI)). If the PDCCH carries system information, particularly, a System Information Block (SIB), its CRC may be masked by a system information ID (e.g. a System Information RNTI (SI-RNTI)). To indicate that the PDCCH carries a random access response to a random access preamble transmitted by a UE, its CRC may be masked by a Random Access-RNTI (RA-RNTI).

Then, the eNB generates coded data by channel-encoding the CRC-added control information. The channel coding may be performed at a code rate corresponding to an MCS level. The eNB rate-matches the coded data according to a CCE aggregation level allocated to a PDCCH format and generates modulation symbols by modulating the coded data. Herein, a modulation order corresponding to the MCS level may be used for the modulation. The CCE aggregation level for the modulation symbols of a PDCCH may be one of 1, 2, 4, and 8. Subsequently, the eNB maps the modulation symbols to physical REs (i.e. CCE to RE mapping).

### 1.2.4 Blind Decoding (BD)

A plurality of PDCCHs may be transmitted in a subframe. That is, the control region of a subframe includes a plurality of CCEs, CCE 0 to CCE $N_{CCE,k-1}$. $N_{CCE,k}$ is the total number of CCEs in the control region of a kth subframe. A UE monitors a plurality of PDCCHs in every subframe. This means that the UE attempts to decode each PDCCH according to a monitored PDCCH format.

The eNB does not provide the UE with information about the position of a PDCCH directed to the UE in an allocated control region of a subframe. Without knowledge of the position, CCE aggregation level, or DCI format of its PDCCH, the UE searches for its PDCCH by monitoring a set of PDCCH candidates in the subframe in order to receive a control channel from the eNB. This is called blind decoding. Blind decoding is the process of demasking a CRC part with a UE ID, checking a CRC error, and determining whether a corresponding PDCCH is a control channel directed to a UE by the UE.

The UE monitors a PDCCH in every subframe to receive data transmitted to the UE in an active mode. In a Discontinuous Reception (DRX) mode, the UE wakes up in a monitoring interval of every DRX cycle and monitors a PDCCH in a subframe corresponding to the monitoring interval. The PDCCH-monitored subframe is called a non-DRX subframe.

To receive its PDCCH, the UE should blind-decode all CCEs of the control region of the non-DRX subframe. Without knowledge of a transmitted PDCCH format, the UE should decode all PDCCHs with all possible CCE aggregation levels until the UE succeeds in blind-decoding a PDCCH in every non-DRX subframe. Since the UE does not know the number of CCEs used for its PDCCH, the UE should attempt detection with all possible CCE aggregation levels until the UE succeeds in blind decoding of a PDCCH.

In the LTE system, the concept of Search Space (SS) is defined for blind decoding of a UE. An SS is a set of PDCCH candidates that a UE will monitor. The SS may have a different size for each PDCCH format. There are two types of SSs, Common Search Space (CSS) and UE-specific/Dedicated Search Space (USS).

While all UEs may know the size of a CSS, a USS may be configured for each individual UE. Accordingly, a UE should monitor both a CSS and a USS to decode a PDCCH. As a consequence, the UE performs up to 44 blind decodings in one subframe, except for blind decodings based on different CRC values (e.g., C-RNTI, P-RNTI, SI-RNTI, and RA-RNTI).

In view of the constraints of an SS, the eNB may not secure CCE resources to transmit PDCCHs to all intended UEs in a given subframe. This situation occurs because the remaining resources except for allocated CCEs may not be included in an SS for a specific UE. To minimize this obstacle that may continue in the next subframe, a UE-specific hopping sequence may apply to the starting point of a USS.

[Table 4] illustrates the sizes of CSSs and USSs.

[Table 4]

| PDCCH Format | Number of CCE (n) | Number of candidates in CSS | Number of candidates in USS |
|---|---|---|---|
| 0 | 1 | - | 6 |
| 1 | 2 | - | 6 |
| 2 | 4 | 4 | 2 |
| 3 | 8 | 2 | 2 |

To mitigate the load of the UE caused by the number of blind decoding attempts, the UE does not search for all defined DCI formats simultaneously. Specifically, the UE always searches for DCI Format 0 and DCI Format 1A in a USS. Although DCI Format 0 and DCI Format 1A are of the same size, the UE may distinguish the DCI formats by a flag for format0/format 1a differentiation included in a PDCCH. Other DCI formats than DCI Format 0 and DCI Format 1A, such as DCI Format 1, DCI Format 1B, and DCI Format 2 may be required for the UE.

The UE may search for DCI Format 1A and DCI Format 1C in a CSS. The UE may also be configured to search for DCI Format 3 or 3A in the CSS. Although DCI Format 3 and DCI Format 3A have the same size as DCI Format 0 and DCI Format 1A, the UE may distinguish the DCI formats by a CRC scrambled with an ID other than a UE-specific ID.

An SS $S_k^{(L)}$ is a PDCCH candidate set with a CCE aggregation level $L \in \{1,2,4,8\}$. The CCEs of PDCCH candidate set m in the SS may be determined by the following equation.

[Equation 1]

$$ L \cdot \left\{ (Y_k + m) \bmod \lfloor N_{CCE,k} / L \rfloor \right\} + i $$

Herein, $M^{(L)}$ is the number of PDCCH candidates with CCE aggregation level L to be monitored in the SS, $m = 0, \cdots, M^{(L)}-1$, i is the index of a CCE in each PDCCH candidate, and $i = 0, \cdots, L-1$. $k = \lfloor n_s/2 \rfloor$ where $n_s$ is the index of a slot in a radio frame.

As described before, the UE monitors both the USS and the CSS to decode a PDCCH. The CSS supports PDCCHs with CCE aggregation levels {4, 8} and the USS supports PDCCHs with CCE aggregation levels {1, 2, 4, 8}. [Table 5] illustrates PDCCH candidates monitored by a UE.

[Table 5]

| Type | Search space $S_k^{(L)}$ | | Number of PDCCH candidates $M^{(L)}$ |
|---|---|---|---|
| | Aggregation level L | Size [in CCEs] | |
| UE-specific | 1 | 6 | 6 |
| | 2 | 12 | 6 |
| | 4 | 8 | 2 |
| | 8 | 16 | 2 |
| Common | 4 | 16 | 4 |
| | 8 | 16 | 2 |

Referring to [Equation 1], for two aggregation levels, L=4 and L=8, $Y_k$ is set to 0 in the CSS, whereas $Y_k$ is defined by [Equation 2] for aggregation level L in the USS.

[Equation 2]

$$Y_k = (A \cdot Y_{k-1}) \bmod D$$

Herein, $Y_{-1} = n_{\text{RNTI}} \neq 0$, $n_{RNTI}$ indicating an RNTI value. A=39827 and D=65537.

**2. Carrier Aggregation (CA) Environment**

**2.1 CA Overview**

A 3GPP LTE system (conforming to Rel-8 or Rel-9) (hereinafter, referred to as an LTE system) uses Multi-Carrier Modulation (MCM) in which a single Component Carrier (CC) is divided into a plurality of bands. In contrast, a 3GPP LTE-A system (hereinafter, referred to an LTE-A system) may use CA by aggregating one or more CCs to support a broader system bandwidth than the LTE system. The term CA is interchangeably used with carrier combining, multi-CC environment, or multi-carrier environment.

In the present disclosure, multi-carrier means CA (or carrier combining). Herein, CA covers aggregation of contiguous carriers and aggregation of non-contiguous carriers. The number of aggregated CCs may be different for a DL and a UL. If the number of DL CCs is equal to the number of UL CCs, this is called symmetric aggregation. If the number of DL CCs is different from the number of UL CCs, this is called asymmetric aggregation. The term CA is interchangeable with carrier combining, bandwidth aggregation, spectrum aggregation, etc.

The LTE-A system aims to support a bandwidth of up to 100MHz by aggregating two or more CCs, that is, by CA. To guarantee backward compatibility with a legacy IMT system, each of one or more carriers, which has a smaller bandwidth than a target bandwidth, may be limited to a bandwidth used in the legacy system.

For example, the legacy 3GPP LTE system supports bandwidths {1.4, 3, 5, 10, 15, and 20MHz} and the 3GPP LTE-A system may support a broader bandwidth than 20MHz using these LTE bandwidths. A CA system of the present disclosure may support CA by defining a new bandwidth irrespective of the bandwidths used in the legacy system.

There are two types of CA, intra-band CA and inter-band CA. Intra-band CA means that a plurality of DL CCs and/or UL CCs are successive or adjacent in frequency. In other words, the carrier frequencies of the DL CCs and/or UL CCs are positioned in the same band. On the other hand, an environment where CCs are far away from each other in frequency may be called inter-band CA. In other words, the carrier frequencies of a plurality of DL CCs and/or UL CCs are positioned in different bands. In this case, a UE may use a plurality of Radio Frequency (RF) ends to conduct communication in a CA environment.

The LTE-A system adopts the concept of cell to manage radio resources. The above-described CA environment may be referred to as a multi-cell environment. A cell is defined as a pair of DL and UL CCs, although the UL resources are not mandatory. Accordingly, a cell may be configured with DL resources alone or DL and UL resources.

For example, if one serving cell is configured for a specific UE, the UE may have one DL CC and one UL CC. If two or more serving cells are configured for the UE, the UE may have as many DL CCs as the number of the serving cells and as many UL CCs as or fewer UL CCs than the number of the serving cells, or vice versa. That is, if a plurality of serving cells are configured for the UE, a CA environment using more UL CCs than DL CCs may also be supported.

CA may be regarded as aggregation of two or more cells having different carrier frequencies (center frequencies). Herein, the term 'cell' should be distinguished from 'cell' as a geographical area covered by an eNB. Hereinafter, intra-band CA is referred to as intra-band multi-cell and inter-band CA is referred to as inter-band multi-cell.

In the LTE-A system, a Primacy Cell (PCell) and a Secondary Cell (SCell) are defined. A PCell and an SCell may be used as serving cells. For a UE in RRC_CONNECTED state, if CA is not configured for the UE or the UE does not support CA, a single serving cell including only a PCell exists for the UE. On the contrary, if the UE is in RRC_CONNECTED state and CA is configured for the UE, one or more serving cells may exist for the UE, including a PCell and one or more SCells.

Serving cells (PCell and SCell) may be configured by an RRC parameter. A physical-layer ID of a cell, PhysCellId is an integer value ranging from 0 to 503. A short ID of an SCell, SCellIndex is an integer value ranging from 1 to 7. A short ID of a serving cell (PCell or SCell), ServeCellIndex is an integer value ranging from 1 to 7. If ServeCellIndex is 0, this indicates a PCell and the values of ServeCellIndex for SCells are pre-assigned. That is, the smallest cell ID (or cell index) of ServeCellIndex indicates a PCell.

A PCell refers to a cell operating in a primary frequency (or a primary CC). A UE may use a PCell for initial connection establishment or connection reestablishment. The PCell may be a cell indicated during handover. In addition, the PCell is a cell responsible for control-related communication among serving cells configured in a CA environment. That is, PUCCH allocation and transmission for the UE may take place only in the PCell. In addition, the UE may use only the PCell in acquiring system information or changing a monitoring procedure. An Evolved Universal Terrestrial Radio Access Network (E-UTRAN) may change only a PCell for a handover procedure by a higher-layer RRCConnectionReconfiguraiton message including mobilityControlInfo to a UE supporting CA.

An SCell may refer to a cell operating in a secondary frequency (or a secondary CC). Although only one PCell is allocated to a specific UE, one or more SCells may be allocated to the UE. An SCell may be configured after RRC connection establishment and may be used to provide additional radio resources. There is no PUCCH in cells other than a PCell, that is, in SCells among serving cells configured in the CA environment.

When the E-UTRAN adds an SCell to a UE supporting CA, the E-UTRAN may transmit all system information related to operations of related cells in RRC_CONNECTED state to the UE by dedicated signaling. Changing system information may be controlled by releasing and adding a related SCell. Herein, a higher-layer RRCConnectionReconfiguration message may be used. The E-UTRAN may transmit a dedicated signal having a different parameter for each cell rather than it broadcasts in a related SCell.

After an initial security activation procedure starts, the E-UTRAN may configure a network including one or more SCells by adding the SCells to a PCell initially configured during a connection establishment procedure. In the CA environment, each of a PCell and an SCell may operate as a CC. Hereinbelow, a Primary CC (PCC) and a PCell may be used in the same meaning and a Secondary CC (SCC) and an SCell may be used in the same meaning in embodiments of the present disclosure.

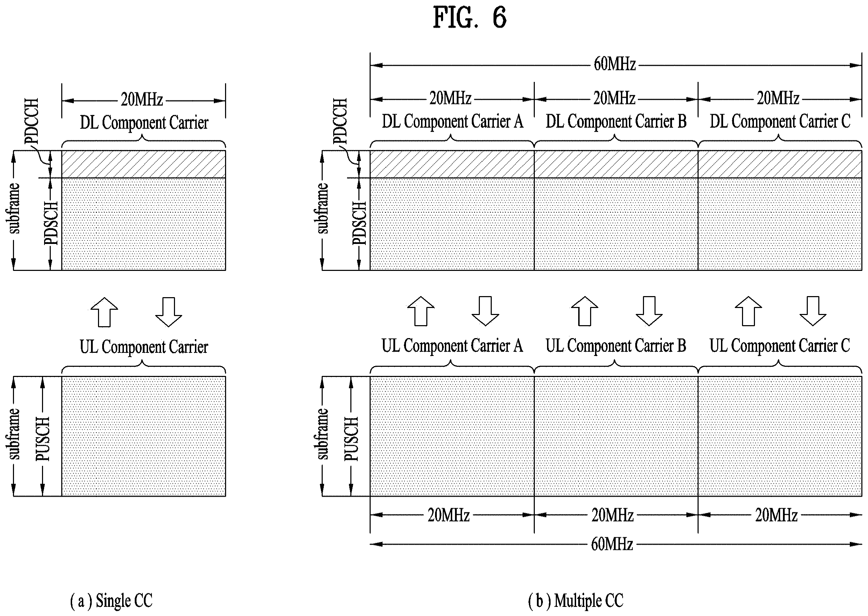

FIG. 6 illustrates an example of CCs and CA in the LTE-A system, which are used in embodiments of the present disclosure.

FIG. 6(a) illustrates a single carrier structure in the LTE system. There are a DL CC and a UL CC and one CC may have a frequency range of 20MHz.

FIG. 6(b) illustrates a CA structure in the LTE-A system. In the illustrated case of FIG. 6(b), three CCs each having 20MHz are aggregated. While three DL CCs and three UL CCs are configured, the numbers of DL CCs and UL CCs are not limited. In CA, a UE may monitor three CCs simultaneously, receive a DL signal/DL data in the three CCs, and transmit a UL signal/UL data in the three CCs.

If a specific cell manages N DL CCs, the network may allocate M (M≤N) DL CCs to a UE. The UE may monitor only the M DL CCs and receive a DL signal in the M DL CCs. The network may prioritize L (L≤M≤N) DL CCs and allocate a main DL CC to the UE. In this case, the UE should monitor the L DL CCs. The same thing may apply to UL transmission.

The linkage between the carrier frequencies of DL resources (or DL CCs) and the carrier frequencies of UL resources (or UL CCs) may be indicated by a higher-layer message such as an RRC message or by system information. For example, a set of DL resources and UL resources may be configured based on linkage indicated by System Information Block Type 2 (SIB2). Specifically, DL-UL linkage may refer to a mapping relationship between a DL CC carrying a PDCCH with a UL grant and a UL CC using the UL grant, or a mapping relationship between a DL CC (or a UL CC) carrying HARQ data and a UL CC (or a DL CC) carrying an HARQ ACK/NACK signal.

## 2.2 Cross Carrier Scheduling

Two scheduling schemes, self-scheduling and cross carrier scheduling are defined for a CA system, from the perspective of carriers or serving cells. Cross carrier scheduling may be called cross CC scheduling or cross cell scheduling.

In self-scheduling, a PDCCH (carrying a DL grant) and a PDSCH are transmitted in the same DL CC or a PUSCH is transmitted in a UL CC linked to a DL CC in which a PDCCH (carrying a UL grant) is received.

In cross carrier scheduling, a PDCCH (carrying a DL grant) and a PDSCH are transmitted in different DL CCs or a PUSCH is transmitted in a UL CC other than a UL CC linked to a DL CC in which a PDCCH (carrying a UL grant) is received.

Cross carrier scheduling may be activated or deactivated UE-specifically and indicated to each UE semi-statically by higher-layer signaling (e.g. RRC signaling).

If cross carrier scheduling is activated, a Carrier Indicator Field (CIF) is required in a PDCCH to indicate a DL/UL CC in which a PDSCH/PUSCH indicated by the PDCCH is to be transmitted. For example, the PDCCH may allocate PDSCH resources or PUSCH resources to one of a plurality of CCs by the CIF. That is, when a PDCCH of a DL CC allocates PDSCH or PUSCH resources to one of aggregated DL/UL CCs, a CIF is set in the PDCCH. In this case, the DCI formats of LTE Release-8 may be extended according to the CIF. The CIF may be fixed to three bits and the position of the CIF may be fixed irrespective of a DCI format size. In addition, the LTE Release-8 PDCCH structure (the same coding and resource mapping based on the same CCEs) may be reused.

On the other hand, if a PDCCH transmitted in a DL CC allocates PDSCH resources of the same DL CC or allocates PUSCH resources in a single UL CC linked to the DL CC, a CIF is not set in the PDCCH. In this case, the LTE Release-8 PDCCH structure (the same coding and resource mapping based on the same CCEs) may be used.

If cross carrier scheduling is available, a UE needs to monitor a plurality of PDCCHs for DCI in the control region of a monitoring CC according to the transmission mode and/or bandwidth of each CC. Accordingly, an appropriate SS configuration and PDCCH monitoring are needed for the purpose.

In the CA system, a UE DL CC set is a set of DL CCs scheduled for a UE to receive a PDSCH, and a UE UL CC set is a set of UL CCs scheduled for a UE to transmit a PUSCH. A PDCCH monitoring set is a set of one or more DL CCs in which a PDCCH is monitored. The PDCCH monitoring set may be identical to the UE DL CC set or may be a subset of the UE DL CC set. The PDCCH monitoring set may include at least one of the DL CCs of the UE DL CC set. Or the PDCCH monitoring set may be defined irrespective of the UE DL CC set. DL CCs included in the PDCCH monitoring set may be configured to always enable self-scheduling for UL CCs linked to the DL CCs. The UE DL CC set, the UE UL CC set, and the PDCCH monitoring set may be configured UE-specifically, UE group-specifically, or cell-specifically.

If cross carrier scheduling is deactivated, this implies that the PDCCH monitoring set is always identical to the UE DL CC set. In this case, there is no need for signaling the PDCCH monitoring set. However, if cross carrier scheduling is activated, the PDCCH monitoring set may be defined within the UE DL CC set. That is, the eNB transmits a PDCCH only in the PDCCH monitoring set to schedule a PDSCH or PUSCH for the UE.

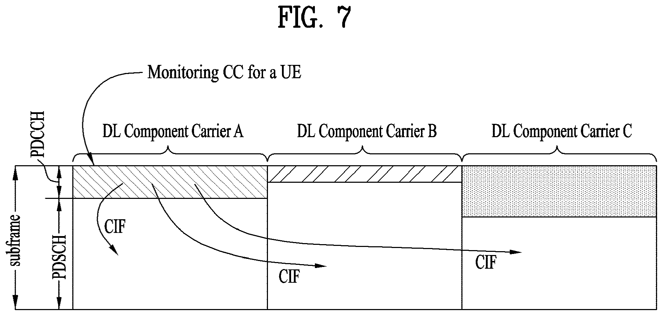

FIG. 7 illustrates a cross carrier-scheduled subframe structure in the LTE-A system, which is used in embodiments of the present disclosure.

Referring to FIG. 7, three DL CCs are aggregated for a DL subframe for LTE-A UEs. DL CC 'A' is configured as a PDCCH monitoring DL CC. If a CIF is not used, each DL CC may deliver a PDCCH that schedules a PDSCH in the same DL CC without a CIF. On the other hand, if the CIF is used by higher-layer signaling, only DL CC 'A' may carry a PDCCH that schedules a PDSCH in the same DL CC 'A' or another CC. Herein, no PDCCH is transmitted in DL CC 'B' and DL CC 'C' that are not configured as PDCCH monitoring DL CCs.

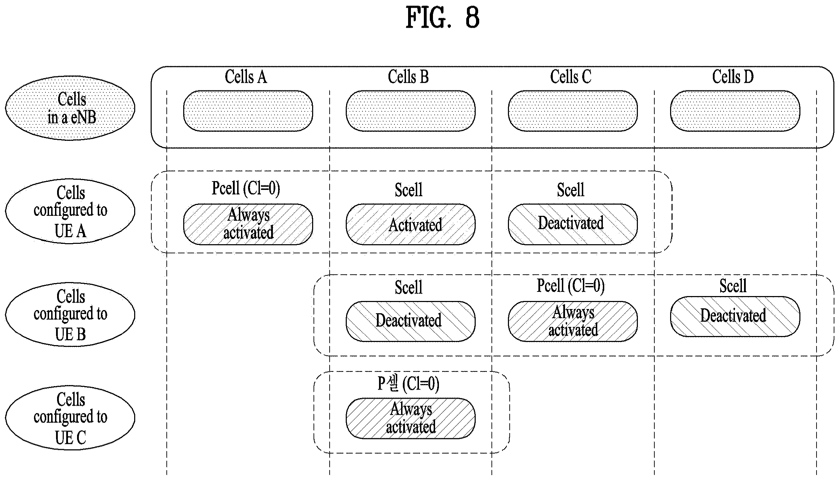

FIG. 8 is conceptual diagram illustrating a construction of serving cells according to cross-carrier scheduling.

Referring to FIG. 8, an eNB (or BS) and/or UEs for use in a radio access system supporting carrier aggregation (CA) may include one or more serving cells. In FIG. 8, the eNB can support a total of four serving cells (cells A, B, C and D). It is assumed that UE A may include Cells (A, B, C), UE B may include Cells (B, C, D), and UE C may include Cell B. In this case, at least one of cells of each UE may be composed of PCell. In this case, PCell is always activated, and SCell may be activated or deactivated by the eNB and/or UE.

The cells shown in FIG. 8 may be configured per UE. The above-mentioned cells selected from among cells of the eNB, cell addition may be applied to carrier aggregation (CA) on the basis of a measurement report message received from the UE. The configured cell may reserve resources for ACK/NACK message transmission in association with PDSCH signal transmission. The activated cell is configured to actually transmit a PDSCH signal and/or a PUSCH signal from among the configured cells, and is configured to transmit CSI reporting and Sounding Reference Signal (SRS) transmission. The deactivated cell is configured not to transmit/receive PDSCH/PUSCH signals by an eNB command or a timer operation, and CRS reporting and SRS transmission are interrupted.

### 2.3 CA Environment-Based CoMP Operation

Hereinafter, a cooperation multi-point (CoMP) transmission operation applicable to the embodiments of the present disclosure will be described.

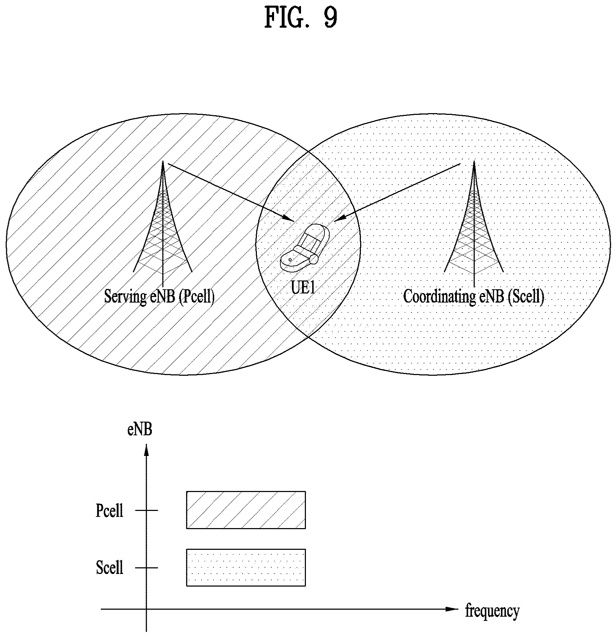

In the LTE-A system, CoMP transmission may be implemented using a carrier aggregation (CA) function in the LTE. FIG. 9 is a conceptual view illustrating a CoMP system operating based on a CA environment.

In FIG. 9, it is assumed that a carrier operated as a PCell and a carrier operated as an SCell may use the same frequency band on a frequency axis and are allocated to two eNBs geographically spaced apart from each other. At this time, a serving eNB of UE1 may be allocated to the PCell, and a neighboring cell causing much interference may be allocated to the SCell. That is, the eNB of the PCell and the eNB of the SCell may perform various DL/UL CoMP operations such as joint transmission (JT), CS/CB and dynamic cell selection for one UE.

FIG. 9 illustrates an example that cells managed by two eNBs are aggregated as PCell and SCell with respect to one UE (e.g., UE1). However, as another example, three or more cells may be aggregated. For example, some cells of three or more cells may be configured to perform CoMP operation for one UE in the same frequency band, and the other cells may be configured to perform simple CA operation in different frequency bands. At this time, the PCell does not always need to participate in CoMP operation.

### 2.4 Reference Signal (RS)

Now, a description will be given of RSs which may be used in embodiments of the present disclosure.

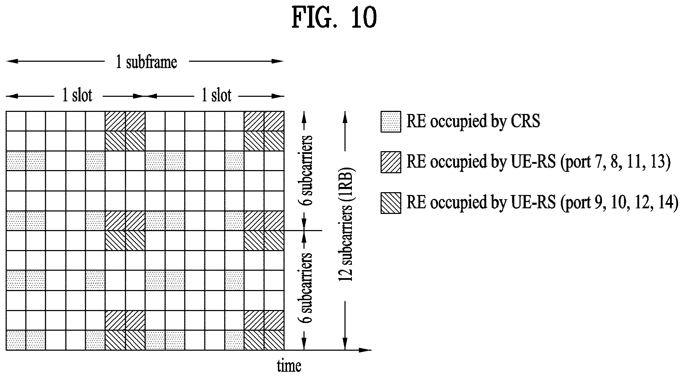

FIG. 10 illustrates an example of a subframe to which UE-RSs are allocated, which may be used in embodiments of the present disclosure.

Referring to FIG. 10, the subframe illustrates REs occupied by UE-RSs among REs in one RB of a normal DL subframe having a normal CP.

UE-RSs are transmitted on antenna port(s) p = 5, p = 7, p = 8 or p = 7, 8, ... , υ+6 for PDSCH transmission, where υ is the number of layers used for the PDSCH transmission. UE-RSs are present and are a valid reference for PDSCH demodulation only if the PDSCH transmission is associated with the corresponding antenna port. UE-RSs are transmitted only on RBs to which the corresponding PDSCH is mapped.

The UE-RSs are configured to be transmitted only on RB(s) to which a PDSCH is mapped in a subframe in which the PDSCH is scheduled unlike CRSs configured to be transmitted in every subframe irrespective of whether the PDSCH is present. Accordingly, overhead of the RS may decrease relative to overhead of the CRS.

In the 3GPP LTE-A system, the UE-RSs are defined in a PRB pair. Referring to FIG. 9, in a PRB having frequency-domain index nPRB assigned for PDSCH transmission with respect to p = 7, p = 8, or p = 7,8,...,υ+6, a part of UE-RS sequence r(m) is mapped to complex-valued modulation symbols.

UE-RSs are transmitted through antenna port(s) corresponding respectively to layer(s) of a PDSCH. That is, the number of UE-RS ports is proportional to a transmission rank of the PDSCH. Meanwhile, if the number of layers is 1 or 2, 12 REs per RB pair are used for UE-RS transmission and, if the number of layers is greater than 2, 24 REs per RB pair are used for UE-RS transmission. In addition, locations of REs occupied by UE-RSs (i.e. locations of UE-RS REs) in a RB pair are the same with respect to a UE-RS port regardless of a UE or a cell.

As a result, the number of DM-RS REs in an RB to which a PDSCH for a specific UE in a specific subframe is mapped is the same per UE-RS ports. Notably, in RBs to which the PDSCH for different UEs in the same subframe is allocated, the number of DM-RS REs included in the RBs may differ according to the number of transmitted layers.

The UE-RS can be used as the DM-RS in the embodiments of the present disclosure.

## 2. 5 Enhanced PDCCH (EPDCCH)

In the 3GPP LTE/LTE-A system, Cross-Carrier Scheduling (CCS) in an aggregation status for a plurality of component carriers (CC: component carrier = (serving) cell) will be defined. One scheduled CC may previously be configured to be DL/UL scheduled from another one scheduling CC (that is, to receive DL/UL grant PDCCH for a corresponding scheduled CC). At this time, the scheduling CC may basically perform DL/UL scheduling for itself. In other words, a search space (SS) for a PDCCH for scheduling scheduling/scheduled CCs which are in the CCS relation may exist in a control channel region of all the scheduling CCs.

Meanwhile, in the LTE system, FDD DL carrier or TDD DL subframes are configured to use first n (n<=4) OFDM symbols of each subframe for transmission of physical channels for transmission of various kinds of control information, wherein examples of the physical channels include a PDCCH, a PHICH, and a PCFICH. At this time, the number of OFDM symbols used for control channel transmission at each subframe may be delivered to the UE dynamically through a physical channel such as PCFICH or semi-statically through RRC signaling.

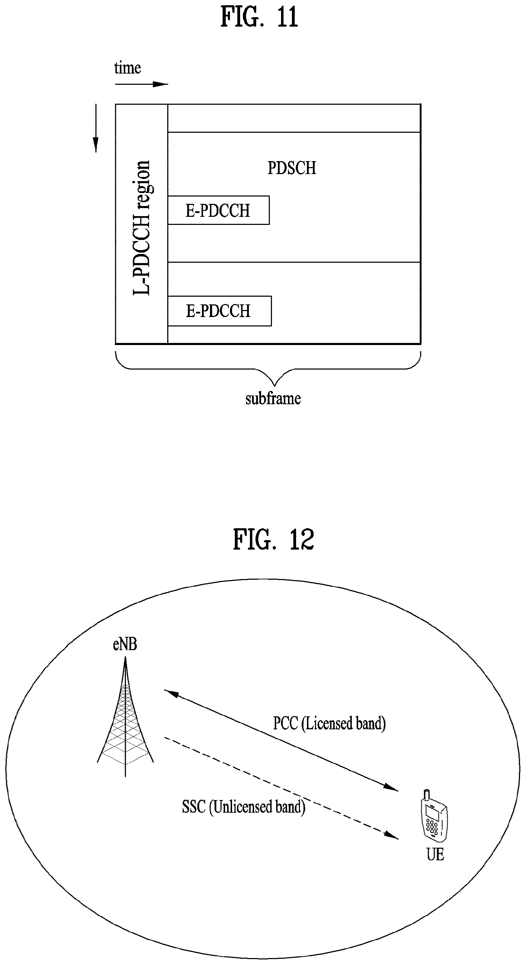

Meanwhile, in the LTE/LTE-A system, since a PDCCH which is a physical channel for DL/UL scheduling and transmitting various kinds of control information has a limitation that it is transmitted through limited OFDM symbols, enhanced PDCCH (i.e., E-PDCCH) multiplexed with a PDSCH more freely in a way of FDM/TDM may be introduced instead of a control channel such as PDCCH, which is transmitted through OFDM symbol and separated from PDSCH. FIG. 11 illustrates an example that legacy PDCCH, PDSCH and E-PDCCH, which are used in an LTE/LTE-A system, are multiplexed.

## 3. LTE-U system

### 3.1 LTE-U System Configuration

Hereinafter, methods for transmitting and receiving data in a CA environment of an LTE-A band corresponding to a licensed band and an unlicensed band will be described. In the embodiments of the present disclosure, an LTE-U system means an LTE system that supports such a CA status of a licensed band and an unlicensed band. A WiFi band or Bluetooth (BT) band may be used as the unlicensed band.

FIG. 12 illustrates an example of a CA environment supported in an LTE-U system.

Hereinafter, for convenience of description, it is assumed that a UE is configured to perform wireless communication in each of a licensed band and an unlicensed band by using two CCs. The methods which will be described hereinafter may be applied to even a case where three or more CCs are configured for a UE.

In the embodiments of the present disclosure, it is assumed that a carrier of the licensed band may be a primary CC (PCC or PCell), and a carrier of the unlicensed band may be a secondary CC (SCC or SCell). However, the embodiments of the present disclosure may be applied to even a case where a plurality of licensed bands and a plurality of unlicensed bands are used in a carrier aggregation method. Also, the methods suggested in the present disclosure may be applied to even a 3GPP LTE system and another system.

In FIG. 12, one eNB supports both a licensed band and an unlicensed band. That is, the UE may transmit and receive control information and data through the PCC which is a licensed band, and may also transmit and receive control information and data through the SCC which is an unlicensed band. However, the status shown in FIG. 12 is only example, and the embodiments of the present disclosure may be applied to even a CA environment that one UE accesses a plurality of eNBs.

For example, the UE may configure a macro eNB (M-eNB) and a PCell, and may configure a small eNB (S-eNB) and an SCell. At this time, the macro eNB and the small eNB may be connected with each other through a backhaul network.

In the embodiments of the present disclosure, the unlicensed band may be operated in a contention-based random access method. At this time, the eNB that supports the unlicensed band may perform a Carrier Sensing (CS) procedure prior to data transmission and reception. The CS procedure determines whether a corresponding band is reserved by another entity.

For example, the eNB of the SCell checks whether a current channel is busy or idle. If it is determined that the corresponding band is idle state, the eNB may transmit a scheduling grant to the UE to allocate a resource through (E)PDCCH of the PCell in case of a cross carrier scheduling mode and through PDCCH of the SCell in case of a self-scheduling mode, and may try data transmission and reception.

At this time, the eNB may configure a TxOP including N consecutive subframes. In this case, a value of N and a use of the N subframes may previously be notified from the eNB to the UE through higher layer signaling through the PCell or through a physical control channel or physical data channel.

### 3.2 Carrier Sensing (CS) Procedure

In embodiments of the present disclosure, a CS procedure may be called a Clear Channel Assessment (CCA) procedure. In the CCA procedure, it may be determined whether a channel is busy or idle based on a predetermined CCA threshold or a CCA threshold configured by higher-layer signaling. For example, if energy higher than the CCA threshold is detected in an unlicensed band, SCell, it may be determined that the channel is busy or idle. If the channel is determined to be idle, an eNB may start signal transmission in the SCell. This procedure may be referred to as LBT.

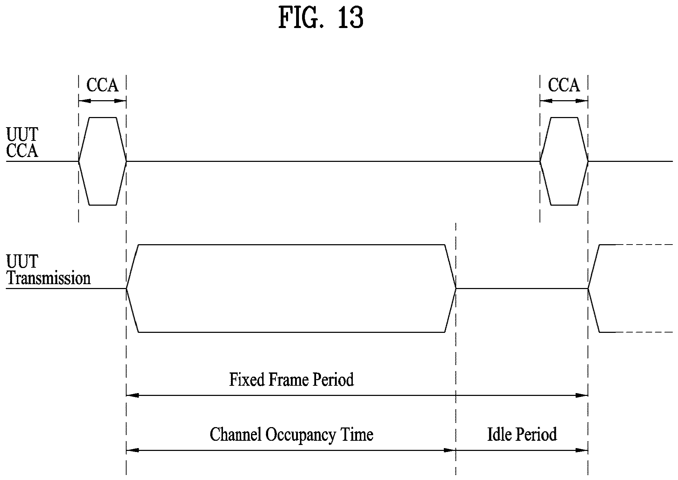

FIG. 13 is a view illustrating an exemplary Frame Based Equipment (FBE) operation as one of LBT operations.

The European Telecommunication Standards Institute (ETSI) regulation (EN 301 893 V1.7.1) defines two LBT operations, Frame Based Equipment (FBE) and Load Based Equipment (LBE). In FBE, one fixed frame is comprised of a channel occupancy time (e.g., 1 to 10ms) being a time period during which a communication node succeeding in channel access may continue transmission, and an idle period being at least 5% of the channel occupancy time, and CCA is defined as an operation for monitoring a channel during a CCA slot (at least $20\mu s$) at the end of the idle period.

A communication node periodically performs CCA on a per-fixed frame basis. If the channel is unoccupied, the communication node transmits data during the channel occupancy time. On the contrary, if the channel is occupied, the communication node defers the transmission and waits until the CCA slot of the next period.

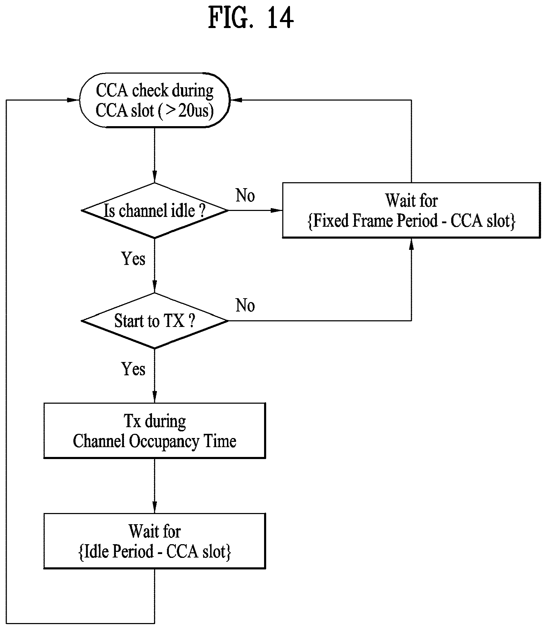

FIG. 14 is a block diagram illustrating the FBE operation.

Referring to FIG. 14, a communication node (i.e., eNB) managing an SCell performs CCA during a CCA slot. If the channel is idle, the communication node performs data transmission (Tx). If the channel is busy, the communication node waits for a time period calculated by subtracting the CCA slot from a fixed frame period, and then resumes CCA.

The communication node transmits data during the channel occupancy time. Upon completion of the data transmission, the communication node waits for a time period calculated by subtracting the CCA slot from the idle period, and then resumes CCA. If the channel is idle but the communication node has no transmission data, the communication node waits for the time period calculated by subtracting the CCA slot from the fixed frame period, and then resumes CCA.

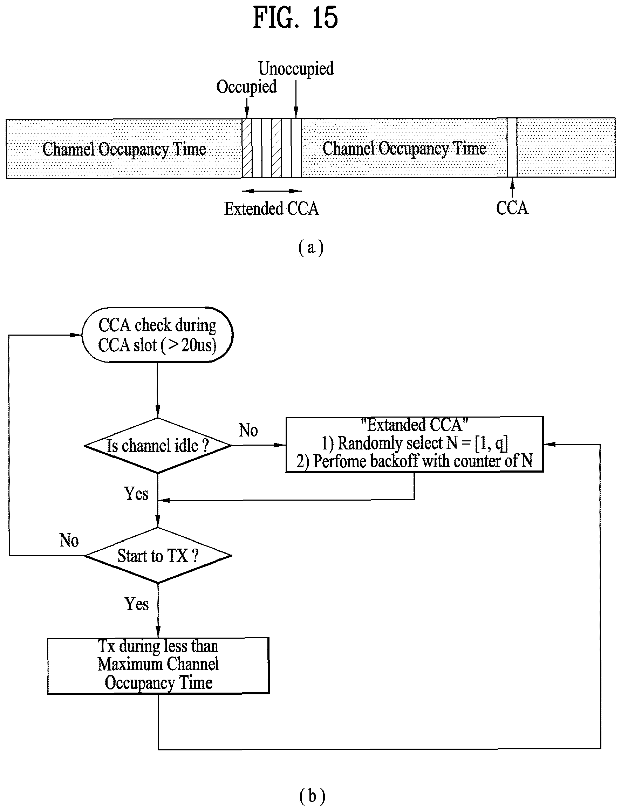

FIG. 15 is a view illustrating an exemplary LBE operation as one of the LBT operations.

Referring to FIG. 15(a), in LBE, the communication node first sets q ($q \in \{4, 5, ..., 32\}$) and then performs CCA during one CCA slot.

FIG. 15(b) is a block diagram illustrating the LBE operation. The LBE operation will be described with reference to FIG. 15(b).

The communication node may perform CCA during a CCA slot. If the channel is unoccupied in a first CCA slot, the communication node may transmit data by securing a time period of up to (13/32)q ms.

On the contrary, if the channel is occupied in the first CCA slot, the communication node selects N ($N \in \{1, 2, ..., q\}$) arbitrarily (i.e., randomly) and stores the selected N value as an initial count. Then, the communication node senses a channel state on a CCA slot basis. Each time the channel is unoccupied in one specific CCA slot, the communication node decrements the count by 1. If the count is 0, the communication node may transmit data by securing a time period of up to (13/32)q ms.

**4. Method of efficiently performing CCA**

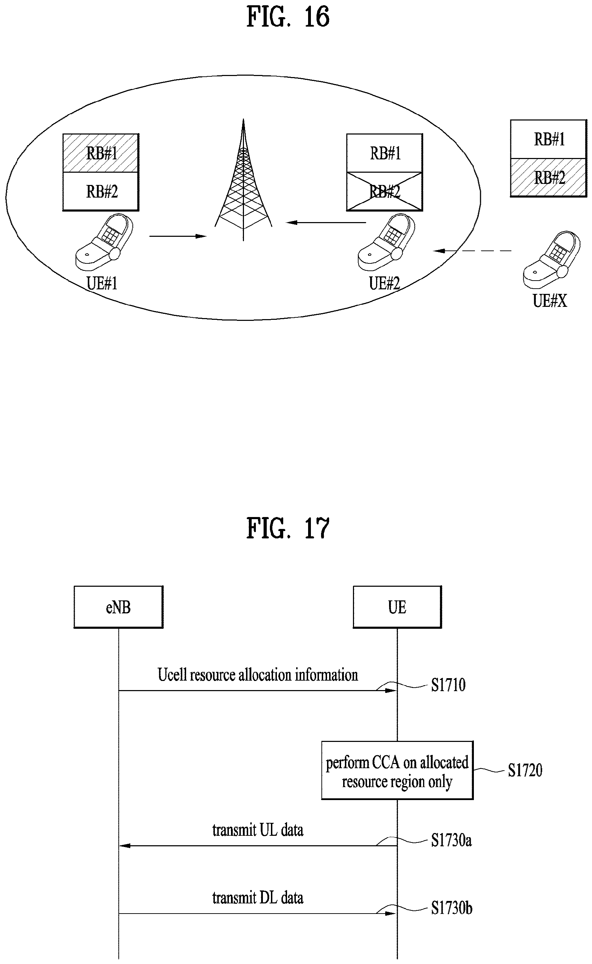

FIG. 16 is one of diagrams for explaining a method of performing a CCA.

As shown in FIG. 16, assume a simple system including two resource blocks (RBs) only. In FIG. 16, assume that a UE#1 and a UE#2 perform cellular communication within a region of an eNB and a UE#X operates in an unlicensed band at the outside of the eNB region. In this case, assume that the UE#2 attempts to transmit and receive data in an unlicensed band to extend coverage or increase data processing amount.

In this case, if both an RB#1 and an RB#2 are allocated to the UE#2, the UE#2 performs clear channel assessment (CCA) for an unlicensed band operation. In this case, since interference occurs from the RB#2 of an inter-operator LAA node (UE#X) adjacent to the UE#2, the UE#2 determines that a channel is busy due to the interference. As a result, the UE#2 is unable to attempt UL transmission via the allocated RBs.

On the contrary, as shown in FIG. 16, if the RB#1 is allocated to the UE#1 and the RB#2 is allocated to the UE#2, although the UE#2 is unable to attempt transmission due to the interference of the UE#X, the UE#1 is able to attempt UL transmission via the RB#1 because the UE#1 receives less interference from a neighboring node. In particular, If FDM is supported between LAA nodes operating on an unlicensed band, since a node receiving less interference rather than a node receiving strong interference from inter-operator LAA nodes (or inter-RAT system such as WiFi) is able to transmit data, it may be able to more efficiently utilize a radio resource compared to TDM (time division multiplexing).

Hence, when FDM (frequency division multiplexing) is supported to the communication performed between an eNB and a UE operating on an unlicensed band, the embodiments of the present invention propose a method of efficiently performing a CCA and a LBT and a method of transmitting a signal.

**4.1 Method of performing CCA in allocated band**

According to a WiFi system corresponding to one of unlicensed bands and a legacy CCA operation, a CCA is performed on the whole of unlicensed bands instead of a resource region allocated to a UE only. Hence, although the resource region allocated to the UE is in an idle state, if a region not allocated to the UE at the same unlicensed bands is busy, the UE is unable to use the resource region allocated to the UE. Hence, the embodiments of the present invention propose methods of performing CCA on an Ucell resource region allocated to the UE only among the total system band (BW).

FIG. 17 is a diagram for explaining a method of performing a CCA in an allocated band only among unlicensed bands.

An eNB can transmit Ucell resource allocation information to a UE. In this case, the Ucell resource allocation information can be semi-statically transmitted via a higher layer signal or can be dynamically transmitted via a physical layer signal [S1710].

The UE performs a CCA on an allocated resource region only and can determine whether an unlicensed band is currently in an idle state or a busy state [S1720].

If the unlicensed band is in the idle state, the UE can transmit uplink data or receive downlink data via the allocated unlicensed band [S1730a, S1730b].

In the following, methods of allocating an UCell resource to a UE in the step S1710 are explained.

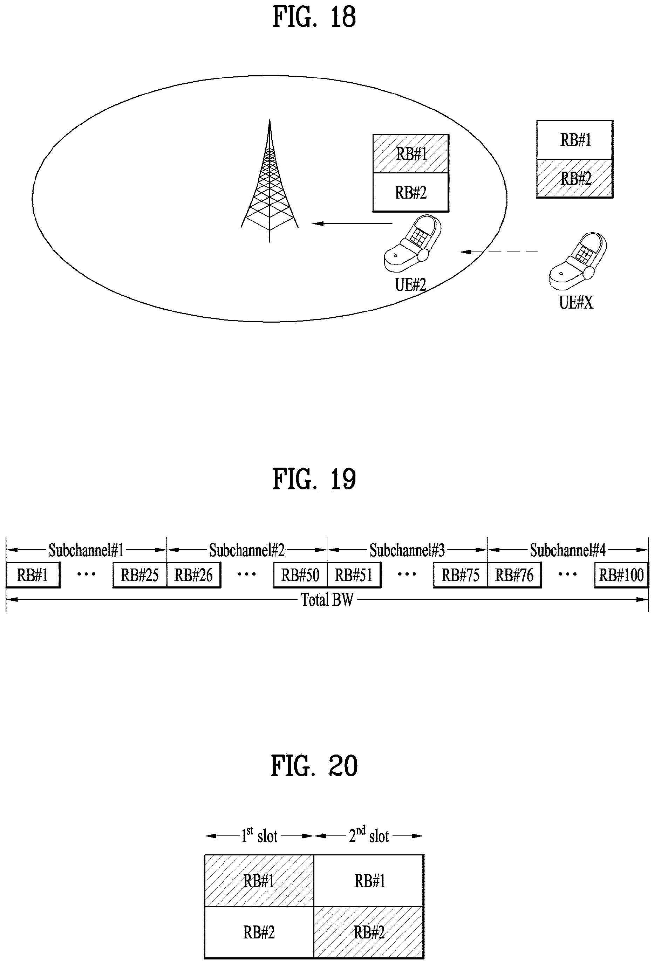

FIG. 18 is a diagram for explaining methods for a UE to which a partial RB is allocated only among a plurality of RBs constructing a bandwidth to perform a CCA operation.

A UE can be configured to perform a CCA on allocated RBs only among the whole of system BW. As shown in FIG. 18, assume that an inter-operator LAA node (UE#X) transmitting a signal to an RB#2 is located in the vicinity of a UE#2 to which an RB#1 is allocated only. Similar to a legacy scheme, if the UE#2 performs a CCA on the whole of system BW, the UE#2 determines that a channel is busy due to the interference caused by the UE#X (although there is no interference received on the RB#1) and may not attempt RB#1 transmission. On the contrary, if the UE#2 performs a CCA on an actually allocated RB#1 only rather than the whole of the system BW, since the amount of interference caused by the UE#X is less on the RB#1, the UE#2 can attempt UL transmission in the RB#1.

FIG. 19 is a diagram for explaining methods of performing a CCA operation on a subchannel in which an RB allocated to a UE is included only when a bandwidth includes a plurality of subchannels.

If the whole of the system BW is divided into a plurality of subchannels, a UE can perform a CCA on one or more subchannels in which an allocated RB is included. As shown in an example of FIG. 19, when a system bandwidth of 20 MHz is configured by 100 RBs, it may be able to configure 4 subchannels in a unit of 5 MHz.

Referring to FIG. 19, if an RB#26 corresponding to a part of a subchannel #2 is allocated to a UE#2, the UE#2 can perform a CCA on the subchannel #2 in which the RB#26 is included.

As a different example, if an RB#25 corresponding to a part of a subchannel #1 and an RB#26 corresponding to a part of a subchannel #2 are allocated to the UE#2, the UE#2 can perform a CCA on the subchannels #1 and #2 in which the RB#25 and the RB#26 are included.

If RBs (or resources) allocated to a specific UE may not be contiguous on a frequency axis, a UE may be able to perform a CCA on all subchannels to which allocated RBs belong thereto. For example, if an RB#1 and an RB#26 are allocated to the UE#2, the UE#2 can perform a CCA on both a subchannel#1 and a subchannel#2.

Since the ETSI regulation mentions that "CCA is performed on an operating channel", if the operating channel is interpreted as a subchannel in the aspect of a UE, the embodiments of the present invention have a merit in that it is able to enjoy the advantage of the FDM while satisfying the regulation.

Although the example of FIG. 19 illustrates a subchannel consisting of physically contiguous RBs, it may be able to configure a subchannel consisting of logically contiguous RBs. In this case, RBs actually constructing a subchannel may not be physically contiguous. In this case, it may be able to configure a specific UE to perform a CCA on a part of subchannels only via higher layer signaling or physical layer signaling of the step S1710. In this case, information on the number of RBs constructing subchannel(s) can also be configured via higher layer signaling or physical layer signaling. Or, the number of RBs constructing a subchannel may vary according to a period value configured via higher layer signaling and a promised rule.

FIG. 20 is a different diagram for explaining methods for a UE to which a partial RB is allocated only among a plurality of RBs constructing a bandwidth to perform a CCA operation.

When slot hopping and/or SRS transmission is considered to transmit PUSCH or when a case that a region to which an RB is allocated is different is considered to transmit contiguous SFs, resource regions allocated to a UE may not be contiguous. In this case, when the UE performs a CCA at a start point of UCell transmission, it may be able to configure the UE to perform the CCA on all RBs included in contiguous transmission regions or subchannel(s) in which the RBs are included.

As shown in FIG. 20, when slot hopping is configured to transmit an RB#1 in a first slot and transmit an RB#2 in a second slot, a UE can perform a CCA on the RB#1 and the RB#2 (or a subchannel in which the RB#1 and the RB#2 are included) before data is transmitted and received in the first slot.

Or, when slot hopping and/or SRS transmission is considered to transmit PUSCH or when a case that a region to which an RB is allocated is different is considered to transmit contiguous SFs, it may be able to configure the UE to perform a CCA on an RB region (or subchannel(s) in which the RBs are included) only of the very first transmission when the CCA is performed at a start point of the transmission. In particular, in the example of FIG. 20, it may be able to configure the UE to perform a CCA on the RB#1 (or a subchannel in which the RB#1 is included) only.

### 4.2 Method of extensively applying CCA method to LBT scheme

The CCA method mentioned earlier in section 4.1 can be extensively applied to an LBT scheme that performs random backoff.

For example, when there is a randomly selected random backoff counter value, the random backoff counter value can be decreased whenever the whole of system BW is in an idle state.

According to an embodiment of the present invention, as mentioned earlier in FIG. 18, the random backoff counter value can be decreased whenever RBs allocated to a UE are in an idle state.

According to a different embodiment of the present invention, as mentioned earlier in FIG. 19, the random backoff counter value can be decreased whenever a subchannel(s) in which allocated RBs are included is in an idle state. Or, a UE may select a different random counter value according to a subchannel, perform random backoff according to a subchannel, and may perform transmission on a subchannel of which the random counter value becomes 0.

According to a further different embodiment of the present invention, as mentioned earlier in FIG. 20, the random counter value can be decreased whenever all RBs (or, subchannel(s) in which the RBs are included) included in contiguous transmission regions are in an idle state. Or, the random counter value can be decreased whenever an RB region (or subchannel(s) in which RBs are included) of the very first transmission is in an idle state.

### 4.3 Uplink transmission method

Meanwhile, only partial RBs (or partial subchannels) may be in an idle state among RBs (or subchannels) allocated to a UE as a result of CCA. In this case, it may be able to configure the UE to give up UL transmission for a corresponding RB. Or, it may be able to configure the UE to attempt the UL transmission by utilizing the partial RBs determined as idle.

In the following, when a UE performs a CCA or a LBT on a resource region allocated to the UE only, UL transmission methods are explained.

**(1) Method 1**

The number of RBs allocated to a UE through a UL grant and an MCS level are respectively defined as ($N'_{PRB}$, $I_{MCS}$). When the UE performs a CCA on an UCell, assume that the number of RBs in an idle state corresponds to $N_{PRB}$. In this case, the UE can transmit UL data by performing rate-matching or puncturing in accordance with the $N_{PRB}$ corresponding to the number of actually available RBs while a transport block size (TBS) determined by the ($N'_{PRB}$, $I_{MCS}$) is fixed.

Or, the UE may be able to attempt transmission using a TBS determined by ($N_{PRB}$, $I_{MCS}$) while $I_{MCS}$ is fixed. In this case, $N_{PRB}$ is the number of RBs which are in idle state.

**(2) Method 2**

According to the method 1, complexity can be considerably increased in the aspect of UE implementation and eNB implementation. For example, it is preferable that a UE where $N'_{PRB}$ =20 should prepare a plurality of DM-RS sequences before a CCA is performed. And, an eNB performs blind detection (BD) on a plurality of the DM-RS sequences to find out the number of RBs actually used by the UE for transmission. As a result, complexity can be increased in terms of UE and eNB implementation.

In order to reduce the complexity, subchannels are configured in a unit of specific number of RBs and a UE can be configured to attempt transmission via subchannels determined as idle. In this case, it may follow the embodiment mentioned earlier in FIG. 19 to determine whether or not a subchannel is idle.

For example, in FIG. 19, assume that 75 RBs ranging from an RB#1 to an RB#75 are allocated to a specific UE. If a subchannel#1 is in a busy state and subchannels #2 and #3 are in an idle state, the UE may attempt transmission using 50 RBs ranging from an RB#26 to an RB#75. In this case, it may follow a method mentioned earlier in the method 1 to determine a TBS.

For example, If ($N'_{PRB}$, $I_{MCS}$) is received for a resource region allocated to the UE, the UE can transmit UL data by performing rate-matching or puncturing in accordance with the $N_{PRB}$(or N2) corresponding to the number of actually available RBs included in a subchannel determined as idle while a transport block size (TBS) determined by the ($N'_{PRB}$, $I_{MCS}$) is fixed.

In particular, if subchannels are configured in a unit of specific number of RBs, since the candidate number of RBs capable of being configured according to a CCA result is reduced, it may be able to reduce the complexity of UE implementation and the number of BDs performed by the eNB.

**(3) Method 3**

As mentioned earlier in the method 1 and the method 2, when a UE attempts transmission using partial RBs only among allocated RBs, if a DM-RS sequence to be transmitted by the UE is regenerated by the number of RBs used for the actual transmission attempt, implementation complexity of UE and eNB increases.

Hence, the UE firstly generates a DM-RS in a manner of being identical to a case of performing transmission on all RBs allocated by the eNB, performs puncturing on a DM-RS of RBs not performing transmission, and may be then able to attempt UL transmission.

**4.4 Method of receiving DL data**

Although the aforementioned technique mentioned earlier in section 4.3 focuses on UL data transmission method, performance gain capable of being obtained via FDM can be identically obtained in DL data reception as well. The CCA and the LBT methods proposed in section 4.1 or 4.2 can be applied to DL transmission as well.

For example, as mentioned earlier in FIG. 19, it may be able to configure a subchannel using a certain number of RBs. In this case, information on the subchannel (e.g., the number of RBs constructing the subchannel, indexing information of the subchannel, etc.) can be set to UEs via higher layer signaling. As proposed earlier in FIG. 19, an eNB performs CCA and may be then able to transmit PDSCH, a CRS, a CRS-RS, CSI-IM, etc. to a subchannel only determined as idle.

If a preamble or an indicator indicating a subchannel actually transmitted by an eNB is not introduced, a UE may consider that signals on a subchannel(s) to which an RB(s) of which PDSCH of the UE is scheduled belongs are valid only. In particular, a CRS/CSI-RS/CSI-IM, which is carried on the subchannel(s) to which the RB(s) of which PDSCH of the UE is scheduled belongs, can be utilized for CSI and RRM measurement. Hence, although the whole of the system BW is not idle, the eNB can transmit PDSCH/CRS/CSI-RS/CSI-IM, etc. via a partial subchannel, thereby enhancing system performance.

On the contrary, it may be able to introduce a preamble indicating a subchannel actually transmitted by an eNB or an explicit indicator via DCI on a common search space. In this case, all UEs are able to know the subchannel actually transmitted by the eNB via the preamble or the explicit indicator and utilize CRS/CSI-RS/CSI-IM, etc. on corresponding subchannels for CSI and RRM management. Hence, although UEs do not schedule PDSCH, resources capable of being utilized for CSI and RRM management can be increased.

In the following, a method for a specific UE to know a subchannel actually transmitted by an eNB via a preamble is proposed in detail.

When a sequence of a preconfigured preamble exists according to a combination of actually used subchannels, if a UE receives the preamble, the UE is able to know a positon of the used subchannel via the sequence of the preamble. Or, when a preamble is configured in advance according to a subchannel, if a UE performs preamble detection according to a subchannel, the UE is able to know an actually transmitted subchannel. In this case, the configured preamble may vary according to a subchannel or the configured preamble can be configured as a common preamble for all subchannels.

## 5. Apparatuses

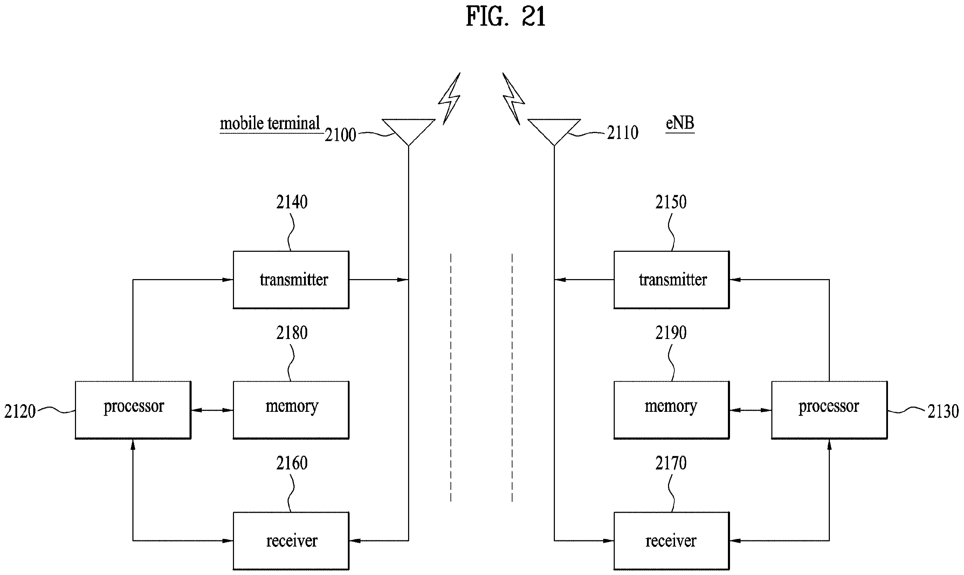

Apparatuses illustrated in FIG. 21 are means that can implement the methods described before with reference to FIGS. 1 to 20.

A UE may act as a transmission end on a UL and as a reception end on a DL. An eNB may act as a reception end on a UL and as a transmission end on a DL.

That is, each of the UE and the eNB may include a Transmitter (Tx) 2140 or 2150 and a Receiver (Rx) 2160 or 2170, for controlling transmission and reception of information, data, and/or messages, and an antenna 2100 or 2110 for transmitting and receiving information, data, and/or messages.

Each of the UE and the eNB may further include a processor 2120 or 2130 for implementing the afore-described embodiments of the present disclosure and a memory 2180 or 2190 for temporarily or permanently storing operations of the processor 2120 or 2130.

The embodiments of the present invention can be performed using a configuration component and functions of the UE and the eNB. For example, a processor of the UE or the eNB controls a transmitter and a receiver to perform a CCA or a LBT on an allocated resource region or a subchannel to which the allocated resource region belongs thereto. If a channel of an UCell is determined as idle according to a result of the CCA or the LBT, the UE or the eNB can transmit and receive data via the channel. For details, it may refer to the sections 1 to 4.

The Tx and Rx of the UE and the eNB may perform a packet modulation/demodulation function for data transmission, a high-speed packet channel coding function, OFDM packet scheduling, TDD packet scheduling, and/or channelization. Each of the UE and the eNB of FIG. 21 may further include a low-power Radio Frequency (RF)/Intermediate Frequency (IF) module.

Meanwhile, the UE may be any of a Personal Digital Assistant (PDA), a cellular phone, a Personal Communication Service (PCS) phone, a Global System for Mobile (GSM) phone, a Wideband Code Division Multiple Access (WCDMA) phone, a Mobile Broadband System (MBS) phone, a hand-held PC, a laptop PC, a smart phone, a Multi Mode-Multi Band (MM-MB) terminal, etc.

The smart phone is a terminal taking the advantages of both a mobile phone and a PDA. It incorporates the functions of a PDA, that is, scheduling and data communications such as fax transmission and reception and Internet connection into a mobile phone. The MB-MM terminal refers to a terminal which has a multi-modem chip built therein and which can operate in any of a mobile Internet system and other mobile communication systems (e.g. CDMA 2000, WCDMA, etc.).

Embodiments of the present disclosure may be achieved by various means, for example, hardware, firmware, software, or a combination thereof.

In a hardware configuration, the methods according to exemplary embodiments of the present disclosure may be achieved by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, etc.

In a firmware or software configuration, the methods according to the embodiments of the present disclosure may be implemented in the form of a module, a procedure, a function, etc. performing the above-described functions or operations. A software code may be stored in the memory 2180 or 2190 and executed by the processor 2120 or 2130. The memory is located at the interior or exterior of the processor and may transmit and receive data to and from the processor via various known means.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein. It is obvious to those skilled in the art that claims that are not explicitly cited in each other in the appended claims may be presented in combination as an embodiment of the present disclosure or included as a new claim by a subsequent amendment after the application is filed.

INDUSTRIAL APPLICABILITY

The present disclosure is applicable to various wireless access systems including a 3GPP system, a 3GPP2 system, and/or an IEEE 802.xx system. Besides these wireless access systems, the embodiments of the present disclosure are applicable to all technical fields in which the wireless access systems find their applications.

**Claims**

1. A method of performing a CCA (clear channel assessment), which is performed by a user equipment in a wireless access system supporting an unlicensed band, the method comprising:

   receiving resource allocation information indicating a resource region allocated to the unlicensed band;
   performing the CCA on the resource region only; and
   if the resource region is in an idle state, transmitting uplink data through the resource region.

2. The method of claim 1, wherein the resource region is allocated in a resource block unit and wherein the CCA is performed in the resource block unit.

3. The method of claim 2, wherein if a number of resource blocks (N') contained in the resource region is different from a number of resource blocks (N1), which are determined as idle according to a result of the CCA, the uplink data is transmitted by fixing a transport block size determined by the number of resource blocks (N') and performing rate matching or puncturing according to the number of resource blocks (N1).

4. The method of claim 1, wherein the resource region is allocated in a resource block unit and wherein the CCA is performed on a subchannel containing the resource region.

5. The method of claim 4, wherein if a number of resource blocks (N') contained in the resource region is different from a number of resource blocks (N2), which are determined as idle according to a result of the CCA, the uplink data is transmitted by fixing a transport block size determined by the number of resource blocks (N') and performing rate matching or puncturing according to the number of resource blocks (N2).

6. The method of claim 1, wherein if the resource region is allocated by a frequency hopping scheme or is allocated to contiguous subframes, the CCA is performed on all subchannels to which the resource region belongs thereto.

7. A user equipment (UE) performing a CCA (clear channel assessment) in a wireless access system supporting an unlicensed band, the UE comprising:

   a receiver;
   a transmitter; and
   a processor supports performance of the CCA in a manner of being functionally connected with the receiver and the transmitter,
   wherein the processor is configured to control the receiver to receive resource allocation information indicating a resource region allocated to the unlicensed band, to perform the CCA on the resource region only, and to control the transmitter to transmit uplink data through the resource region when the resource region is in an idle state.

8. The user equipment of claim 7, wherein the resource region is allocated in a resource block unit and wherein the CCA is performed in the resource block unit.

9. The user equipment of claim 8, wherein if a number of resource blocks (N') contained in the resource region is different from a number of resource blocks (N1), which are determined as idle according to a result of the CCA, the uplink data is transmitted by fixing a transport block size determined by the number of resource blocks (N') and performing rate matching or puncturing according to the number of resource blocks (N1).

10. The user equipment of claim 7, wherein the resource region is allocated in a resource block unit and wherein the CCA is performed on a subchannel containing the resource region.

11. The user equipment of claim 10, wherein if a number of resource blocks (N') contained in the resource region is different from a number of resource blocks (N2), which are determined as idle according to a result of the CCA, the uplink data is transmitted by fixing a transport block size determined by the number of resource blocks (N') and performing rate matching or puncturing according to the number of resource blocks (N2).

12. The user equipment of claim 7, wherein if the resource region is allocated by a frequency hopping scheme or is allocated to contiguous subframes, the CCA is performed on all subchannels to which the resource region belongs thereto.

# FIG. 1

initial cell search | system information reception | random access procedure | general DL/UL Tx/Rx S18

| P/S - SCH & [DLRS] & PBCH | PDCCH/ PDSCH (BCCH) | PRACH | PDCCH/ PDSCH | PRACH | PDCCH/ PDSCH | PDCCH/ PDSCH | PUSCH/ PUCCH |

S11   S12   S13   S14   S15   S16   S17

• DL/UL ACK/NACK
• UE CQI/PMI/rank report using PUSCH and PUCCH

EP 3 282 803 A1

# FIG. 2

(a)

1 radio frame, $T_f = 307200T_s = 10ms$

1 slot = $15360T_s = 0.5ms$

하나의 서브 프레임

| #0 | #1 | #2 | ... | #18 | #19 |

(b)

1 radio frame, $T_f = 307200T_s = 10ms$

1 half-frame, $153600T_s = 5ms$

$30720T_s$

1 slot $T_{slot} = 15360T_s$

One subframe, $30720T_s$

| subframe #0 | subframe #2 | subframe #3 | subframe #4 | subframe #5 | subframe #7 | subframe #8 | subframe #9 |

DwPTS   GP   UpPTS

DwPTS   GP   UpPTS

# FIG. 3

slot

7 symbols

resource block
12×7 resource elements

resource element

$N^{DL} \times 12$ subcarriers,

12 subcarriers

# FIG. 4

control region

data region

resource block pair

first slot

second slot

frequency

subframe

time

# FIG. 5

control region

data region

first slot

second slot

1 subframe

frequency

time

# FIG. 6

(a) Single CC

(b) Multiple CC

# FIG. 7

# FIG. 8

| | Cells A | Cells B | Cells C | Cells D |
|---|---|---|---|---|
| **Cells in a eNB** | | | | |

| | Cells A | Cells B | Cells C |
|---|---|---|---|
| **Cells configured to UE A** | Pcell (Cl=0) Always activated | Scell Activated | Scell Deactivated |

| | Cells B | Cells C | Cells D |
|---|---|---|---|
| **Cells configured to UE B** | Scell Deactivated | Pcell (Cl=0) Always activated | Scell Deactivated |

| | Cells B |
|---|---|
| **Cells configured to UE C** | P셀 (Cl=0) Always activated |

# FIG. 9

# FIG. 10

RE occupied by CRS

RE occupied by UE-RS (port 7, 8, 11, 13)

RE occupied by UE-RS (port 9, 10, 12, 14)

1 subframe

1 slot    1 slot

6 subcarriers

6 subcarriers

12 subcarriers (1RB)

time

# FIG. 11

subframe

# FIG. 12

# FIG. 13

# FIG. 14

CCA check during
CCA slot ( >20us)

Is channel idle ?

No → Wait for
{Fixed Frame Period - CCA slot}

Yes

Start to TX ?

No

Yes

Tx during
Channel Occupancy Time

Wait for
{Idle Period - CCA slot}

# FIG. 15

Occupied

Unoccupied

| Channel Occupancy Time | | Channel Occupancy Time | |

Extended CCA

CCA

(a)

```
   ┌─────────────────────┐
   │  CCA check during   │
   │  CCA slot ( >20us)  │
   └─────────────────────┘
            │
            ▼
      ╱─────────────╲    No    ┌──────────────────────────────────────┐
     ╱ Is channel idle ?╲─────▶│ "Extanded CCA"                       │
     ╲                  ╱       │ 1) Randomly select N = [1, q]        │
      ╲─────────────╱           │ 2) Perfome backoff with counter of N │
            │                   └──────────────────────────────────────┘
           Yes
            │
            ▼
      ╱─────────────╲    No
     ╱  Start to TX ? ╲──────
     ╲                ╱
      ╲─────────────╱
            │
           Yes
            │
            ▼
   ┌─────────────────────┐
   │ Tx during less than │
   │  Maximum Channel    │
   │  Occupancy Time     │
   └─────────────────────┘
```

(b)

# FIG. 16

# FIG. 17

Ucell resource allocation information — S1710

perform CCA on allocated resource region only — S1720

transmit UL data — S1730a

transmit DL data — S1730b

# FIG. 18

RB#1
RB#2

RB#1
RB#2

UE#2

UE#X

# FIG. 19

Subchannel#1 — Subchannel#2 — Subchannel#3 — Subchannel#4

| RB#1 | ... | RB#25 | RB#26 | ... | RB#50 | RB#51 | ... | RB#75 | RB#76 | ... | RB#100 |

Total BW

# FIG. 20

1st slot — 2nd slot

| RB#1 | RB#1 |
| RB#2 | RB#2 |

# FIG. 21

EP 3 282 803 A1

## INTERNATIONAL SEARCH REPORT

International application No.

**PCT/KR2016/003703**

| A. | CLASSIFICATION OF SUBJECT MATTER |
|---|---|

*H04W 74/08(2009.01)i, H04W 72/04(2009.01)i*

According to International Patent Classification (IPC) or to both national classification and IPC

| B. | FIELDS SEARCHED |
|---|---|

Minimum documentation searched (classification system followed by classification symbols)
H04W 74/08; H04L 1/16; H04L 1/18; H04W 72/04

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: unlicensed band, CCA, LBT, resource, allocation, idle state

| C. | DOCUMENTS CONSIDERED TO BE RELEVANT | |
|---|---|---|
| Category* | Citation of document, with indication, where appropriate, of the relevant passages | Relevant to claim No. |
| Y | WO 2015-027139 A2 (QUALCOMM INCORPORATED) 26 February 2015<br>See claim 14. | 1-2,4,7-8,10 |
| A | | 3,5-6,9,11-12 |
| Y | WO 2014-0200951 A2 (QUALCOMM INCORPORATED) 18 December 2014<br>See claims 2, 10, 19. | 1-2,4,7-8,10 |
| A | WO 2015-023659 A1 (QUALCOMM INCORPORATED) 19 February 2015<br>See paragraphs [0054]-[0058]; and figure 3. | 1-12 |
| A | WO 2014-189912 A1 (QUALCOMM INCORPORATED) 27 November 2014<br>See paragraphs [0226]-[0232]; and figure 15. | 1-12 |
| A | WO 2015-023909 A2 (QUALCOMM INCORPORATED) 19 February 2015<br>See paragraphs [0090]-[0091]; and figures 14A, 14B. | 1-12 |

☐ Further documents are listed in the continuation of Box C.   ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 19 JULY 2016 (19.07.2016) | **19 JULY 2016 (19.07.2016)** |

| Name and mailing address of the ISA/KR | Authorized officer |
|---|---|
| Korean Intellectual Property Office<br>Government Complex-Daejeon, 189 Seonsa-ro, Daejeon 302-701, Republic of Korea | |
| Facsimile No. 82-42-472-7140 | Telephone No. |

Form PCT/ISA/210 (second sheet) (January 2015)

INTERNATIONAL SEARCH REPORT
Information on patent family members

International application No.

**PCT/KR2016/003703**

| Patent document cited in search report | Publication date | Patent family member | Publication date |
|---|---|---|---|
| WO 2015-027139 A2 | 26/02/2015 | CA 2918359 A1 | 26/02/2015 |
| | | CN 105474569 A | 06/04/2016 |
| | | KR 10-2016-0048827 A | 04/05/2016 |
| | | TW 201511498 A | 16/03/2015 |
| | | US 2015-0055589 A1 | 26/02/2015 |
| | | WO 2015-027139 A3 | 23/04/2015 |
| WO 2014-200951 A2 | 18/12/2014 | CA 2911397 A1 | 18/12/2014 |
| | | CN 105309031 A | 03/02/2016 |
| | | EP 3008962 A2 | 20/04/2016 |
| | | KR 10-2016-0019457 A | 19/02/2016 |
| | | US 2014-0362780 A1 | 11/12/2014 |
| | | WO 2014-200951 A3 | 05/02/2015 |
| WO 2015-023659 A1 | 19/02/2015 | CN 105474567 A | 06/04/2016 |
| | | US 2015-0049709 A1 | 19/02/2015 |
| WO 2014-189912 A1 | 27/11/2014 | AU 2014-268759 A1 | 24/12/2015 |
| | | AU 2014-268763 A1 | 24/12/2015 |
| | | AU 2014-268764 A1 | 24/12/2015 |
| | | AU 2014-268765 A1 | 07/01/2016 |
| | | AU 2014-268767 A1 | 24/12/2015 |
| | | CA 2909632 A1 | 27/11/2014 |
| | | CA 2909638 A1 | 27/11/2014 |
| | | CA 2909640 A1 | 27/11/2014 |
| | | CA 2909646 A1 | 27/11/2014 |
| | | CA 2909671 A1 | 27/11/2014 |
| | | CN 105230062 A | 06/01/2016 |
| | | CN 105230109 A | 06/01/2016 |
| | | CN 105247914 A | 13/01/2016 |
| | | CN 105247929 A | 13/01/2016 |
| | | CN 105284173 A | 27/01/2016 |
| | | CN 105309033 A | 03/02/2016 |
| | | CN 105309037 A | 03/02/2016 |
| | | EP 3000252 A2 | 30/03/2016 |
| | | EP 3000253 A2 | 30/03/2016 |
| | | EP 3000259 A1 | 30/03/2016 |
| | | EP 3000269 A1 | 30/03/2016 |
| | | EP 3000274 A1 | 30/03/2016 |
| | | EP 3000275 A2 | 30/03/2016 |
| | | EP 3000279 A2 | 30/03/2016 |
| | | KR 10-2016-0010480 A | 27/01/2016 |
| | | KR 10-2016-0010481 A | 27/01/2016 |
| | | KR 10-2016-0010482 A | 27/01/2016 |
| | | KR 10-2016-0010483 A | 27/01/2016 |
| | | KR 10-2016-0010586 A | 27/01/2016 |
| | | KR 10-2016-0010587 A | 27/01/2016 |
| | | KR 10-2016-0010588 A | 27/01/2016 |
| | | PH 12015502518 A1 | 29/02/2016 |

Form PCT/ISA/210 (patent family annex) (January 2015)

INTERNATIONAL SEARCH REPORT
Information on patent family members

International application No.

**PCT/KR2016/003703**

| Patent document cited in search report | Publication date | Patent family member | Publication date |
|---|---|---|---|
| | | PH 12015502519 A1 | 29/02/2016 |
| | | PH 12015502520 A1 | 29/02/2016 |
| | | PH 12015502532 A1 | 22/02/2016 |
| | | PH 12015502566 A1 | 29/02/2016 |
| | | SG 11201508385 A | 30/12/2015 |
| | | SG 11201508468 A | 30/12/2015 |
| | | SG 11201508470 A | 30/12/2015 |
| | | SG 11201508472 A | 30/12/2015 |
| | | SG 11201508490 A | 30/12/2015 |
| | | US 2014-0341018 A1 | 20/11/2014 |
| | | US 2014-0341024 A1 | 20/11/2014 |
| | | US 2014-0341035 A1 | 20/11/2014 |
| | | US 2014-0341053 A1 | 20/11/2014 |
| | | US 2014-0341135 A1 | 20/11/2014 |
| | | US 2014-0341207 A1 | 20/11/2014 |
| | | US 2014-0342745 A1 | 20/11/2014 |
| | | WO 2014-189908 A2 | 27/11/2014 |
| | | WO 2014-189908 A3 | 09/04/2015 |
| | | WO 2014-189909 A2 | 27/11/2014 |
| | | WO 2014-189909 A3 | 22/01/2015 |
| | | WO 2014-189913 A1 | 27/11/2014 |
| | | WO 2014-189914 A1 | 27/11/2014 |
| | | WO 2014-189915 A2 | 27/11/2014 |
| | | WO 2014-189915 A3 | 19/03/2015 |
| | | WO 2014-189916 A2 | 27/11/2014 |
| | | WO 2014-189916 A3 | 16/04/2015 |
| WO 2015-023909 A2 | 19/02/2015 | CN 105453685 A | 30/03/2016 |
| | | US 2015-0049712 A1 | 19/02/2015 |
| | | WO 2015-023909 A3 | 06/08/2015 |
| | | WO 2015-023909 A8 | 31/03/2016 |

Form PCT/ISA/210 (patent family annex) (January 2015)